# EUROPEAN PATENT APPLICATION

(11) **EP 4 814 906 A1**
(43) Date of publication of application: **30.09.2026**
(21) Application number: 26163311.9
(22) Date of filing: 09.03.2026
(51) Int. Cl.: G07C 5/08, G01M 15/10, B60W 40/09, B60W 40/10, B60W 40/105, B60W 40/107

(54) **DATA ACQUISITION DEVICE, DATA ACQUISITION METHOD, AND PROGRAM**

(30) Priority: 24.03.2025 JP 2025048380
(71) Applicant: Toyota Jidosha Kabushiki Kaisha, Toyota-shi, Aichi-ken 471-8571 (JP)
(72) Inventor: HANO, Yuji, Toyota-shi, 471-8571 (JP)
(74) Representative: D Young & Co LLP

(57) **Abstract**

A data acquisition device, a data acquisition method, and a program are provided. Each time the traveling speed of a vehicle (100) is acquired during a vehicle performance test, a previous acceleration (ACn-1) as an acceleration of the vehicle (100) at a time point of acquiring a previously acquired speed (Vn-1) is calculated (S21) based on a speed from two measurements earlier (Vn-2) and a currently acquired speed (Vn). A reference value (Van-1) is the product of the previously acquired speed (Vn-1) and the previous acceleration (ACn-1). A calculated value (MxOR) is obtained based on the reference value (Van-1). After an end of the vehicle performance test, processing circuitry (51) determines whether a manner in which the vehicle performance test is conducted satisfies a performance condition based on the calculated value (MxOR) (S41 to S45)

## Description

### CROSS-REFERENCE TO RELATED APPLICATIONS

This application is based upon and claims the benefit of priority from Japanese Patent Application No. 2025-048380, filed on March 24, 2025, the entire contents of which are incorporated herein by reference.

### BACKGROUND

### 1. Field

The present disclosure relates to a data acquisition device, a data acquisition method, and a program.

### 2. Description of Related Art

In real driving emissions (RDE) testing and the like, vehicle performance tests are conducted on public roads or similar roadways. Components in exhaust gas emitted during the vehicle performance test are analyzed. The vehicle performance test is required to be conducted so as to satisfy predetermined performance conditions.

A vehicle performance test apparatus disclosed in JP2019-203888A shows a driver, during a vehicle performance test, a driving operation style that satisfies performance conditions.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a data acquisition device mounted on a vehicle includes processing circuitry and a storage device. The processing circuitry is configured to perform acquiring a traveling speed of the vehicle multiple times to acquire a currently acquired speed, a previously acquired speed, and a speed from two measurements earlier. The processing circuitry is configured to perform, each time the traveling speed is acquired during a vehicle performance test of the vehicle: calculating, based on the speed from two measurements earlier and the currently acquired speed, a previous acceleration as an acceleration of the vehicle at a time point of acquiring the previously acquired speed; calculating a reference value that is a product of the previously acquired speed and the previous acceleration; and updating a calculated value stored in the storage device, the calculated value being calculated based on the reference value. The processing circuitry is configured to perform, after an end of the vehicle performance test, determining whether a manner in which the vehicle performance test is conducted satisfies a performance condition based on the calculated value.

Another aspect of the present disclosure provides a data acquisition method for performing operations that are the same as those performed by the data acquisition device.

A further aspect of the present disclosure provides a non-transitory computer-readable storage medium storing a program code for causing processing circuitry to implement a data acquisition process including operations that are the same as those in the data acquisition method, or a program product or a program that are implemented by a storage medium.

The above-described data acquisition device can determine whether the manner in which the vehicle performance test is conducted satisfies the specified performance condition without requiring a relatively large storage capacity.

The calculated value can indicate successive manner of running during the vehicle performance test. It is possible to determine, based on the calculated value, whether data acquired through a vehicle performance test is data that has been acquired through a vehicle performance test satisfying the performance condition and is suitable for analysis. As the calculated value, a value calculated based on a Vapos value may be used. The Vapos value is a product of a vehicle traveling speed and an acceleration during the vehicle performance test.

All the traveling speeds acquired during the vehicle performance test are continuously stored until the end of the vehicle performance test, and the acceleration is calculated based on the history data of the traveling speed after the end of the vehicle performance test. In this manner, all the Vapos values during the vehicle performance test can be calculated. However, when the Vapos values are calculated in this manner, a relatively large storage capacity is required to store the data acquired throughout the vehicle performance test.

It is desirable to determine whether the manner in which the vehicle performance test is conducted satisfies a specified performance condition without requiring a relatively large storage capacity. The above-described configuration resolves this issue.

Other features and aspects will be apparent from the following detailed description, the drawings, and the claims.

### BRIEF DESCRIPTION OF THE DRAWINGS

Fig. 1 is a schematic diagram showing a configuration of a vehicle equipped with a data acquisition device according to a first embodiment.
Fig. 2 is a flowchart showing a series of processes executed by a data acquisition device of a comparative example.
Fig. 3 is a table showing combinations of time points at which traveling speeds are acquired by the data acquisition device of the comparative example, traveling speeds of a vehicle, accelerations of the vehicle, and Vapos values.
Fig. 4 is a scatter diagram showing the relationship between the traveling speeds acquired by the data acquisition device of the comparative example through a vehicle performance test and Vapos values calculated based on traveling speeds.
Fig. 5 is a flowchart showing a series of processes executed by the data acquisition device of Fig. 1 when calculating a Vapos value.
Fig. 6 is a diagram showing a manner in which the data acquisition device of Fig. 1 calculates the Vapos value.
Fig. 7 is a scatter diagram showing the relationship between the traveling speeds acquired by the data acquisition device of Fig. 1 through a vehicle performance test and Vapos values calculated based on traveling speeds.
Fig. 8 is a flowchart showing a series of processes executed by the data acquisition device of Fig. 1 when updating a maximum threshold pass rate MxOR.
Fig. 9 is a flowchart showing a series of processes executed by the data acquisition device of Fig. 1 when determining whether the maximum threshold pass rate MxOR satisfies a performance condition.
Fig. 10 is a flowchart showing a series of processes executed by the data acquisition device of Fig. 1 when updating an RPA value.
Fig. 11 is a flowchart showing a series of processes executed by the data acquisition device of Fig. 1 when determining whether the RPA value satisfies a performance condition.
Fig. 12 is a flowchart showing a series of processes executed by the data acquisition device of Fig. 1 when determining whether the manner in which the vehicle performance test is conducted satisfies a performance condition.
Fig. 13 is a flowchart showing a series of processes executed by a data acquisition device according to a second embodiment when updating a pair of count values.
Fig. 14 is a flowchart showing a series of processes executed by the data acquisition device of the second embodiment when determining whether the maximum threshold pass rate MxOR satisfies the performance condition.
Fig. 15 is a flowchart showing a series of processes executed by the data acquisition device according to the second embodiment when updating an accumulated Vapos value VaS and an accumulated incremental travel distance value DS.
Fig. 16 is a flowchart showing a series of processes executed by the data acquisition device of the second embodiment when determining whether the RPA value satisfies the performance condition.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

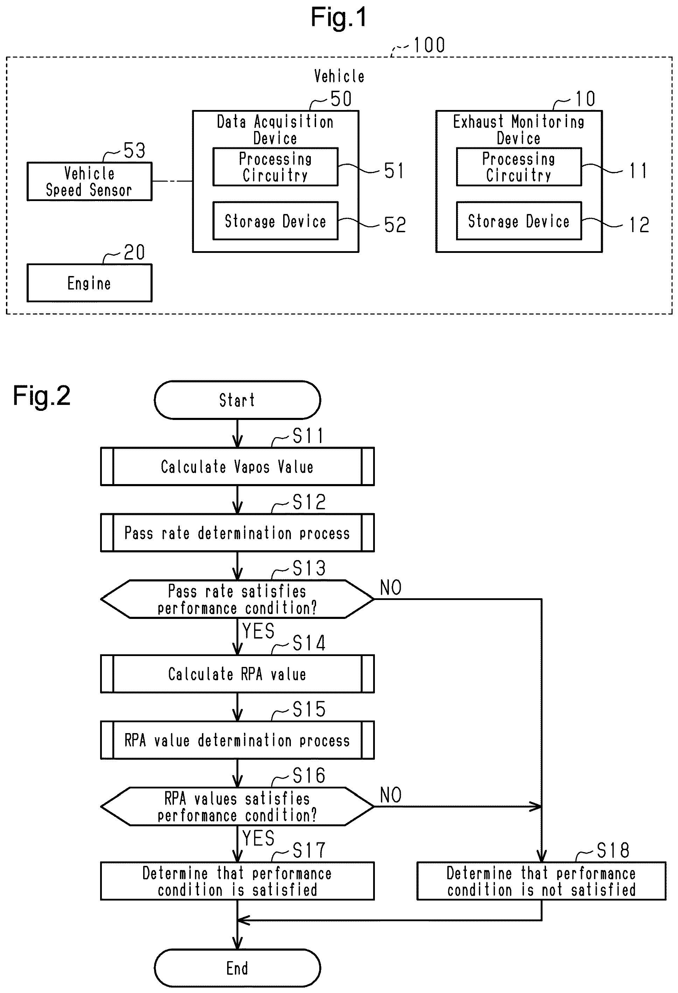

Figs. 1 to 12 illustrate a data acquisition device, a data acquisition method, a data acquisition process, a program, a program product, and a storage medium according to a first embodiment of the present disclosure.

### Structure of Vehicle 100

As shown in Fig. 1, a vehicle 100 includes an exhaust monitoring device 10, an engine 20, a data acquisition device 50, and a vehicle speed sensor 53. The data acquisition device 50 and the exhaust monitoring device 10 are implemented by one or multiple onboard electronic control units of the vehicle 100.

As shown in Fig. 1, the data acquisition device 50 includes processing circuitry 51 and a storage device 52. The storage device 52 is a data acquisition memory module that stores programs or program codes. The processing circuitry 51 is a data acquisition processing circuit that executes various kinds of processes by executing programs or program codes stored in the storage device 52. The processing circuitry 51 includes a processor.

As shown in Fig. 1, the data acquisition device 50 is communicably connected to the vehicle speed sensor 53. The vehicle speed sensor 53 measures a traveling speed of the vehicle 100. Specifically, the vehicle speed sensor 53 outputs the traveling speed of the vehicle 100 every second based on the rotational speed of the output shaft of the vehicle 100. The data acquisition device 50 periodically acquires the traveling speed of the vehicle 100 from the vehicle speed sensor 53 while the vehicle 100 is traveling. That is, the data acquisition device 50 acquires the traveling speed multiple times.

As shown in Fig. 1, the exhaust monitoring device 10 includes exhaust monitoring processing circuitry 11 and an exhaust monitoring storage device 12. The exhaust monitoring storage device 12 stores programs or program codes. The exhaust monitoring processing circuitry 11 executes various processes by executing programs or program codes stored in the exhaust monitoring storage device 12. The exhaust monitoring processing circuitry 11 includes a processor.

The exhaust monitoring device 10 monitors components of exhaust gas of the engine 20. The exhaust monitoring device 10 acquires information on components of exhaust gas of the engine 20 from various sensors. For example, the exhaust monitoring device 10 acquires the concentration of nitrogen oxides contained in the exhaust gas from a nitrogen oxide sensor installed in an exhaust pipe of the engine 20.

### Outline of Vehicle Performance Test

A vehicle performance test on a road such as a public road is required to be conducted to satisfy a predetermined performance condition. The data acquisition device 50 acquires the traveling speed of the vehicle 100 during the vehicle performance test. Specifically, the data acquisition device 50 acquires the traveling speed multiple times during the vehicle performance test. The data acquisition device 50 determines whether the manner in which the vehicle performance test of the vehicle 100 is conducted satisfies a specified performance condition based on the acquired traveling speed.

Specifically, the data acquisition device 50 calculates a reference value based on the acquired traveling speed. Thereafter, the data acquisition device 50 calculates a calculated value based on the reference value, and determines whether the manner in which the vehicle performance test of the vehicle 100 is conducted satisfies the specified performance condition based on the calculated value. The reference value and the calculated value will be described later. When the data acquisition device 50 determines that the manner in which the vehicle performance test of the vehicle 100 is conducted satisfies the specified performance condition, the exhaust monitoring device 10 analyzes components in exhaust gas discharged from the vehicle 100 during the vehicle performance test.

The exhaust monitoring device 10 monitors components of exhaust gas discharged during the vehicle performance test of the vehicle 100, and stores information on the components in the exhaust monitoring storage device 12. The exhaust monitoring device 10 analyzes the components in the exhaust gas discharged by the vehicle 100 during the vehicle performance test based on the information on the components of the exhaust gas acquired during the vehicle performance test.

### Determination of Whether the Performance condition is Satisfied in Comparative Example

Figs. 2 to 4 illustrate a manner in which a data acquisition device of a comparative example determines whether the manner in which the vehicle performance test of the vehicle 100 is conducted satisfies the specified performance condition. The data acquisition device of the comparative example is mounted on the vehicle 100 shown in Fig. 1. In the comparative example described below, unlike the data acquisition device 50 of Fig. 1, the data acquisition device of the comparative example is not an onboard electronic control unit of the vehicle 100, but an external device carried onboard the vehicle 100. Hereinafter, the data acquisition device of the comparative example is referred to as an external device.

The external device periodically acquires the traveling speed of the vehicle 100 from the vehicle speed sensor 53 during the vehicle performance test, and continues to store all the traveling speeds acquired during the vehicle performance test in the storage device until the end of the vehicle performance test.

Fig. 2 shows a series of processes executed by the external device to determine whether the manner in which the vehicle performance test of the vehicle 100 is conducted satisfies the performance condition. The external device executes a series of processes shown in Fig. 2 after the vehicle performance test of the vehicle 100 has ended. Hereinafter, in Fig. 2, S denotes a step.

When the series of processes shown in Fig. 2 is started, the external device first executes the process of S11. In the process of S11, the external device calculates a Vapos value.

The Vapos value is a product of the traveling speed of the vehicle 100 and the acceleration of the vehicle 100 during the vehicle performance test. In the Vapos value, the symbol 'V' represents velocity. In the Vapos value, the symbol 'a' represents acceleration. In the Vapos value, the symbol 'pos' represents positive. The Vapos value is a reference value used for determining whether the manner in which the vehicle performance test of the vehicle 100 is conducted satisfies the performance condition.

### Method for Calculating Vapos Value in Comparative Example

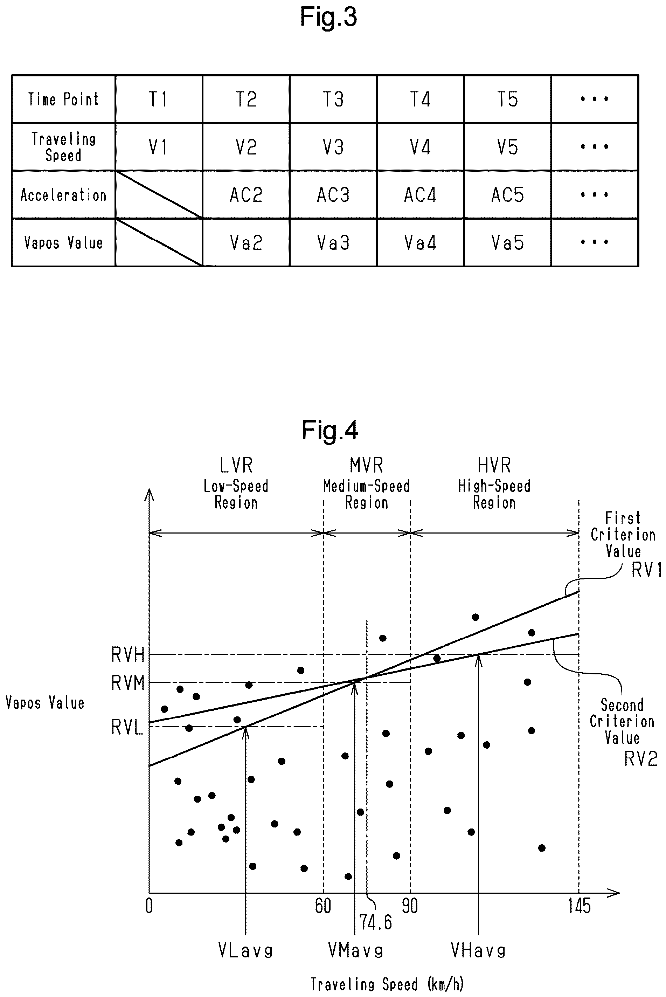

Fig. 3 is a table showing combinations of time points at which traveling speeds are acquired by the external device, traveling speeds of vehicle 100, accelerations of the vehicle 100, and Vapos values. Hereinafter, a manner in which the external device calculates the Vapos values will be described with reference to Fig. 3.

In Fig. 3, time points at which the external device acquires the traveling speeds are represented by symbols each composed of a combination of the letter T and a numeral. In Fig. 3, the numeral appended after T corresponds to a number of times the external device has acquired the traveling speed. For example, T1 indicates a time point at which the external device first acquires a traveling speed of the vehicle 100 during the vehicle performance test.

In Fig. 3, traveling speeds of the vehicle 100 are represented by symbols each composed of a combination of the letter V and a numeral. In Fig. 3, the numeral appended after V corresponds to the time point at which the traveling speed is acquired. For example, V1 indicates the traveling speed of the vehicle 100 acquired by the external device at the time point T1.

In Fig. 3, accelerations of the vehicle 100 are represented by symbols each composed of a combination of the letters AC and a numeral. In Fig. 3, the numeral appended after AC corresponds to the time point at which the traveling speed is acquired. For example, AC2 is the acceleration of the vehicle 100 at a time point T2.

When calculating an acceleration at a given time point, the external device calculates the acceleration at the time point based on a traveling speed acquired at a measurement immediately preceding the time point and a traveling speed acquired at a measurement immediately following the time point. For example, when the external device calculates AC2, the external device calculates AC2 as shown in Equation 1 below. $AC 2 = \frac{V 3 - V 1}{MT}$

In Equation 1 above, MT is a measurement time required from when the vehicle speed sensor 53 acquires a traveling speed one measurement before a given time point until when the vehicle speed sensor 53 acquires a traveling speed one measurement after that given time point. As described above, the vehicle speed sensor 53 outputs a traveling speed every second. Thus, in Equation 1, MT, which is the measurement time from the time point T1, at which V1 is acquired, to a time point T3, at which V3 is acquired, is two seconds. In this manner, when the external device calculates the acceleration at a given time point, the external device calculates the acceleration at that time point by dividing, by the measurement time, the difference between a traveling speed acquired one measurement after that time point and a traveling speed acquired one measurement before that time point.

In Fig. 3, the Vapos values are represented by symbols each composed of a combination of the letters Va and a numeral. In Fig. 3, the numeral appended after Va corresponds to the time at which the traveling speed is acquired. For example, Va2 is the product of V2, which is the traveling speed at the time point T2, and AC2, which is the acceleration at the time point T2. The external device calculates a Vapos value by multiplying the traveling speed of the vehicle 100 by the acceleration at the time point of acquisition of the traveling speed.

The external device first calculates the accelerations corresponding to all the traveling speeds stored in the storage device in the process of S11 after the end of the vehicle performance test. That is, the external device calculates accelerations corresponding to all time points from the time point T2 onward during the vehicle performance test. Thereafter, the external device calculates Vapos values corresponding to all time points from the time point T2 onward during the vehicle performance test.

### Simple Pass Rate SmOR Determination Process

As shown in Fig. 2, the external device executes the process of S11, and then executes the process of S12. In the process of S12, the external device executes a simple pass rate SmOR determination process.

The simple pass rate SmOR is a ratio of the number of Vapos values that are less than or equal to a criterion value RV to the total number of Vapos values calculated based on all the traveling speeds acquired throughout the vehicle performance test. The simple pass rate SmOR is a calculated value that the external device calculates based on reference values.

Fig. 4 illustrates a manner in which the external device executes the simple pass rate SmOR determination process.

Fig. 4 is a scatter diagram showing the relationship between traveling speeds acquired by the external device through a vehicle performance test and Vapos values calculated based on the traveling speeds.

Fig. 4 shows three speed regions (LVR, MVR, HVR). As shown in Fig. 4, the speed regions include a low-speed region LVR, a medium-speed region MVR, and a high-speed region HVR. The low-speed region LVR is a speed region in a range of 60 km/h or less. The medium-speed region MVR is a speed region in a range greater than 60 km/h and 90 km/h or less. The high-speed region HVR is a speed region in a range greater than 90 km/h and 145 km/h or less. In Fig. 4, points indicating the relationship between traveling speed and Vapos value are plotted within one of the three speed regions depending on the traveling speed.

The external device calculates the criterion value RV for each speed region based on traveling speeds acquired during the vehicle performance test. In each speed region, the external device compares the Vapos values plotted within the speed region with the calculated criterion value RV.

Fig. 4 shows, in addition to points indicating the relationship between traveling speeds and Vapos values, lines indicating functions for calculating two criterion values, namely, a first criterion value RV1 and a second criterion value RV2.

The function for calculating the first criterion value RV1 is expressed by the following equation, where Vavg denotes an average vehicle speed. $RV 1 = 0.136 \times Vavg + 14.44$

The function for calculating the second criterion value RV2 is expressed by the following equation, where Vavg denotes an average vehicle speed. The slope of Equation 3 is smaller than the slope of Equation 2. The y-intercept of Equation 3, which indicates an intersection with the y-axis, is larger than the y-intercept of Equation 2, which indicates an intersection with the y-axis. Accordingly, at a speed of 0 km/h, the second criterion value RV2 represented by Equation 3 is greater than the first criterion value RV1 represented by Equation 2. As the speed increases, the second criterion value RV2 intersects the first criterion value RV1, and the second criterion value RV2 eventually becomes smaller than the first criterion value RV1. The intersection of the first criterion value RV1 and the second criterion value RV2 is located in the medium-speed region MVR. In the low-speed region LVR, the second criterion value RV2 is greater than the first criterion value RV1. In the high-speed region HVR, the second criterion value RV2 is smaller than the first criterion value RV1. $RV 2 = 0.0742 \times Vavg + 18.966$

The external device calculates, for each speed region, an average vehicle speed of traveling speeds plotted within the speed region. Fig. 4 shows an example of the average vehicle speed for each speed region calculated by the external device. In Fig. 4, VLavg denotes an average vehicle speed in the low-speed region LVR. In Fig. 4, VMavg denotes an average vehicle speed in the medium-speed region MVR. In Fig. 4, VHavg denotes an average vehicle speed in the high-speed region HVR. Hereinafter, a manner in which the external device calculates the simple pass rate SmOR when the external device has calculated an average vehicle speed shown in Fig. 4 will be described.

The external device determines the criterion value for each speed region by substituting the average vehicle speed in each speed region into the above equation. When the calculated average vehicle speed is less than or equal to 74.6 km/h, the external device outputs the first criterion value RV1 by substituting the calculated average vehicle speed into Equation 2 shown above. When the calculated average vehicle speed is greater than 74.6 km/h, the external device outputs the second criterion value RV2 by substituting the calculated average vehicle speed into Equation 3 shown above. The speed 74.6 km/h is the intersection of the first criterion value RV1 and the second criterion value RV2, that is, the intersection of Equation 2 and Equation 3.

In the example shown in Fig. 4, VLavg, which denotes the average vehicle speed in the low-speed region LVR, is less than or equal to 74.6 km/h. In the example of Fig. 4, the external device outputs the first criterion value RV1 by substituting VLavg into Equation 2. RVL in Fig. 4 denotes the first criterion value RV1 output by substituting VLavg into Equation 2. In the case of Fig. 4, RVL is the criterion value of the low-speed region LVR.

In the example shown in Fig. 4, VMavg, which denotes the average vehicle speed in the medium-speed region MVR, is less than or equal to 74.6 km/h. In the example of Fig. 4, the external device outputs the first criterion value RV1 by substituting VMavg into Equation 2. RVM in Fig. 4 is the first criterion value RV1 output by substituting the VMavg into Equation 2. In the example of Fig. 4, RVM is the criterion value of the medium-speed region MVR.

In the example shown in Fig. 4, the average vehicle speed VHavg in the high-speed region HVR is greater than 74.6 km/h. In the example of Fig. 4, the external device outputs the second criterion value RV2 by substituting VHavg into Equation 3. RVH in Fig. 4 denotes the second criterion value RV2 output by substituting VHavg into Equation 3. In the example of Fig. 4, RVH is the criterion value of the high-speed region HVR.

In the simple pass rate SmOR determination process, the external device calculates the criterion value in each speed region and then determines whether the simple pass rate SmOR in each speed region is greater than or equal to a threshold. In the comparative example, the threshold is 95%. In the simple pass rate SmOR determination process, for each speed region, the external device determines whether the ratio of Vapos values plotted within the speed region that are less than or equal to the criterion value for the speed region to the Vapos values plotted within the speed region is 95% or more.

In order to determine whether the simple pass rate SmOR is greater than or equal to the threshold, the external device arranges the Vapos values plotted within the speed region in ascending order. When the Vapos value located at the 95th percentile among the Vapos values plotted within the speed region is at or below the criterion value for the speed region, the external device determines that the simple pass rate SmOR in that speed region is greater than or equal to the threshold.

Specifically, in order to determine whether the simple pass rate SmOR in the low-speed region LVR is greater than or equal to the threshold, the external device arranges the Vapos values plotted within the low-speed region LVR in ascending order. When the Vapos value located at the 95th percentile among the Vapos values plotted within the low-speed region LVR is at or below RVL of Fig. 4, the external device determines that the simple pass rate SmOR in the low-speed region LVR is greater than or equal to the threshold.

In order to determine whether the simple pass rate SmOR in the medium-speed region MVR is greater than or equal to the threshold, the external device arranges the Vapos values plotted within the medium-speed region MVR in ascending order. When the Vapos value located at the 95th percentile among the Vapos values plotted within the medium-speed region MVR is at or below RVM of Fig. 4, the external device determines that the simple pass rate SmOR in the medium-speed region MVR is greater than or equal to the threshold.

In order to determine whether the simple pass rate SmOR in the high-speed region HVR is greater than or equal to the threshold, the external device arranges the Vapos values plotted within the high-speed region HVR in ascending order. When the Vapos value located at the 95th percentile among the Vapos values plotted within the high-speed region HVR is at or below RVH of Fig. 4, the external device determines that the simple pass rate SmOR in the high-speed region HVR is greater than or equal to the threshold.

### Performance Condition Determination Based on Simple Pass Rate SmOR

As shown in Fig. 2, after executing the simple pass rate SmOR determination process, the external device advances the process to S13. In the process of S13, the external device determines whether the simple pass rate SmOR satisfies the performance condition.

In the process of S13, the external device determines that the simple pass rate SmOR satisfies the performance condition when it is determined that the simple pass rate SmOR is greater than or equal to the threshold in all the speed regions. In the process of S13, the external device determines that the simple pass rate SmOR does not satisfy the performance condition when it is determined that the simple pass rate SmOR in at least one speed region is less than the threshold.

### Method for Calculating RPA Value

As shown in Fig. 2, when the external device determines that the simple pass rate SmOR satisfies the performance condition in the process of S13 (S13: YES), the external device advances the process to S14. In the process of S14, the external device calculates a relative positive acceleration (RPA) value. The RPA value is also referred to as an average acceleration.

The RPA value is a quotient obtained by dividing a total of Vapos values calculated based on traveling speeds acquired during a vehicle performance test by a total of incremental distance over the vehicle performance test. In other words, the RPA value is a calculated value obtained based on the Vapos values serving as reference values. The external device calculates the RPA value for each speed region.

The external device calculates the total of the Vapos values for each speed region in order to calculate the RPA value in the process of S14. The calculation of the total of the Vapos values is performed by adding the Vapos values calculated in the process of S11 for each speed region.

The incremental distance is a distance traveled by the vehicle 100 from when the external device acquires a traveling speed to when the external device acquires the next traveling speed. As described above, the vehicle speed sensor 53 outputs the traveling speed of the vehicle 100 every one second. Accordingly, the incremental distance is a distance traveled by the vehicle 100 in one second (a unit time interval). For example, when the traveling speed of the vehicle 100 at the time point T3 in Fig. 3 is 60 km/h, the incremental distance from the time point T2 to the time point T3 is 1/3600 of 60 km, that is, approximately 16.67 m. This is because one hour is 3600 seconds.

The external device calculates the incremental distances from all the traveling speeds acquired during the vehicle performance test in order to calculate the RPA value in the process of S14. Thereafter, for each speed region to which the traveling speeds serving as bases for calculating the incremental distances belong, the external device sums the calculated incremental distances to calculate, for each speed region, a total of the incremental distances.

In the process of S14, the external device calculates the total of the Vapos values and the total of the incremental distances for each speed region, and then calculates the RPA value for each speed region by dividing the total of the Vapos values by the total of the incremental distances.

### Performance condition Determination Based on RPA Value

As illustrated in Fig. 2, after calculating the RPA value, the external device executes the process of S15. In the process of S15, the external device executes an RPA value determination process.

The RPA value determination process is a process of determining whether the RPA value satisfies the performance condition by comparing the RPA value with a threshold.

In the RPA value determination process, the external device first calculates an average vehicle speed during the vehicle performance test for each speed region. The external device calculates, for each speed region, an average of traveling speeds belonging to the speed region.

Thereafter, in the RPA value determination processing, the external device sets a threshold for comparison with the RPA value for each speed region based on the average vehicle speed during the vehicle performance test.

When the average vehicle speed during the vehicle performance test is less than or equal to 94.05 km/h, the external device sets a threshold THR by substituting the average vehicle speed during the vehicle performance test into a function expressed by the following equation. $THR = - 0.0016 \times Vavg + 0.1755$

In Equation 4, THR is a threshold to be compared with the RPA value. In Equation 4, Vavg denotes an average vehicle speed during the vehicle performance test. When the average vehicle speed during the vehicle performance test is less than or equal to 94.05 km/m, the external device sets the threshold to the THR output by Equation 4.

When the average vehicle speed during the vehicle performance test is greater than 94.05 km/h, the external device sets the threshold to 0.025.

After setting the threshold for each speed region, the external device compares the RPA value with the threshold for each speed region in the RPA value determination process. The external device determines that the RPA value satisfies the performance condition when the RPA values in all the speed regions are greater than or equal to the RPA value threshold. The external device determines that the RPA value does not satisfy the performance condition when the RPA value in at least one of the speed regions is less than the RPA value threshold.

### Final Determination in Fig. 2

As shown in Fig. 2, after executing the RPA value determination process, the external device advances the process to S16. In the process of S16, the external device determines whether the RPA value satisfies the performance condition.

In a case in which it is determined that the RPA value satisfies the performance condition in the RPA value determination process, the external device determines that the RPA value satisfies the performance condition in the process of S16. In a case in which it is determined that the RPA value does not satisfy the performance condition in the RPA value determination process, the external device determines that the RPA value does not satisfy the performance condition in the process of S16.

In a case in which it is determined that the RPA value satisfies the performance condition in the process of S16 (S16: YES), the external device advances the process to S17. In the process of S17, the external device determines that the manner in which the vehicle performance test of the vehicle 100 is conducted satisfies the performance condition. Thereafter, the external device ends the series of processes illustrated in Fig. 2.

When determining that the simple pass rate SmOR does not satisfy the performance condition in the process of S13 (S13: NO), the external device advances the process to S18. When determining that the RPA value does not satisfy the performance condition in the process of S16 (S16: NO), the external device also advances the process to S18. In the process of S18, the external device determines that the manner in which the vehicle performance test of the vehicle 100 is conducted does not satisfy the performance condition. Thereafter, the external device ends the series of processes illustrated in Fig. 2.

As described above, when determining that the performance condition is satisfied in both of the determination based on the simple pass rate SmOR and the determination based on the RPA value, the external device determines that the manner in which the vehicle performance test of the vehicle 100 is conducted satisfies the performance condition. In contrast, when determining that the performance condition is not satisfied in at least one of the determination based on the simple pass rate SmOR and the determination based on the RPA value, the external device determines that the manner in which the vehicle performance test of the vehicle 100 is conducted does not satisfy the performance condition.

The external device of the comparative example must continue storing, in a storage device until the vehicle performance test ends, all traveling speeds acquired during the vehicle performance test. This is required so that, after the vehicle performance test has ended, the external device can determine, in the manner shown in Fig. 2, whether the manner in which the vehicle performance test of the vehicle 100 is conducted satisfies performance condition. In this case, the external device needs to allocate a relatively large storage capacity. Therefore, an onboard electronic control unit of the vehicle 100 may not be able to function as the external device representing the comparative example.

### Determination of Whether Performance condition is Satisfied by the Data Acquisition Device 50

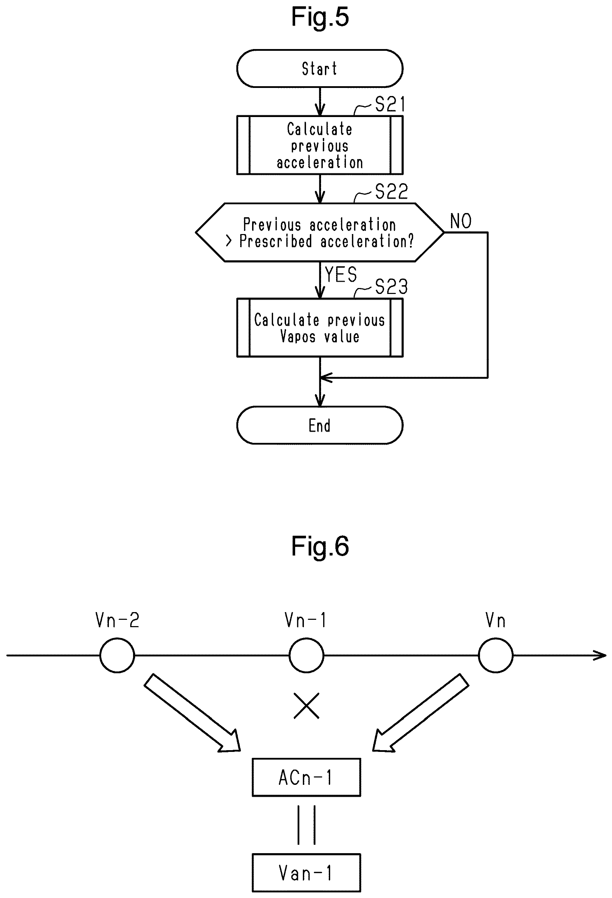

The data acquisition device 50 of the present embodiment is capable of determining whether the manner in which the vehicle performance test is conducted satisfies the performance condition while reducing the amount of data to be stored as compared with the comparative example described above. Hereinafter, a manner in which the data acquisition device 50 determines whether the manner in which the vehicle performance test is conducted satisfies the performance condition will be described with reference to Figs. 5 to 12.

### Manner in Which the Data Acquisition Device 50 Calculates Vapos Value

Fig. 5 shows a series of processes executed by the data acquisition device 50 when calculating the Vapos value. The series of processes shown in Fig. 5 is executed by the processing circuitry 51 when the traveling speed is acquired from the vehicle speed sensor 53 during the vehicle performance test of the vehicle 100. In Fig. 5, S denotes a step.

When the series of processes shown in Fig. 5 is started, the processing circuitry 51 first executes the process of S21. In the process of S21, the processing circuitry 51 calculates a previous acceleration ACn-1.

Fig. 6 illustrates a manner in which the processing circuitry 51 calculates a Vapos value.

In Fig. 6, Vn-2 is the traveling speed of the vehicle 100 acquired two measurements earlier by the processing circuitry 51. That is, with reference to the traveling speed Vn acquired at the start of the series of processes shown in Fig. 5, Vn-2 is the traveling speed acquired two measurements prior thereto. In other words, Vn-2 is the traveling speed from two measurements earlier.

In Fig. 6, Vn-1 is the traveling speed of the vehicle 100 acquired in the preceding measurement by the processing circuitry 51. That is, with reference to the traveling speed Vn acquired at the start of the series of processes shown in Fig. 5, Vn-1 is the traveling speed acquired one measurement prior thereto. In other words, Vn-1 is the traveling speed from the previous measurement.

In Fig. 6, Vn is the traveling speed of the vehicle 100 acquired in the current measurement by the processing circuitry 51. That is, Vn is the currently acquired speed as the traveling speed acquired at the start of the series of processes shown in Fig. 5.

As described with reference to Fig. 3, the Vapos value is the product of a traveling speed and an acceleration at the time point of acquisition of that traveling speed. In the process of S21, the processing circuitry 51 calculates the acceleration of the vehicle 100 at the time point at which the previous traveling speed Vn-1 was acquired, namely, the previous acceleration ACn-1. At this time, as shown in Fig. 6, the processing circuitry 51 calculates the previous acceleration ACn-1 based on Vn-2 and Vn in the same manner as in the above Equation 1.

After calculating the previous acceleration ACn-1, the processing circuitry 51 advances the process to S22. In the process of S22, the processing circuitry 51 determines whether the previous acceleration ACn-1 is greater than a prescribed acceleration ACth. The prescribed acceleration ACth is, for example, 0.1 m/s².

When determining in the process of S22 that the previous acceleration ACn-1 is greater than the prescribed acceleration ACth (S22: YES), the processing circuitry 51 advances the process to S23. In the process of S23, the processing circuitry 51 calculates a previous Vapos value Van-1. At this time, as shown in Fig. 6, the processing circuitry 51 calculates, as the previous Vapos value Van-1, the product of the previous traveling speed Vn-1 and the previous acceleration ACn-1 already calculated in S21. Thereafter, the processing circuitry 51 ends the series of processes shown in Fig. 5.

In this manner, the processing circuitry 51 calculates the previous Vapos value Van-1 as a reference value each time the traveling speed is acquired during the vehicle performance test.

When determining that the previous acceleration ACn-1 is less than or equal to the prescribed acceleration ACth in the process of S22 (S22: NO), the processing circuitry 51 ends the series of processes shown in Fig. 5. That is, the processing circuitry 51 does not calculate the Vapos value when the previous acceleration ACn-1 is less than or equal to the prescribed acceleration ACth.

### Outline of Maximum Threshold Pass Rate MxOR

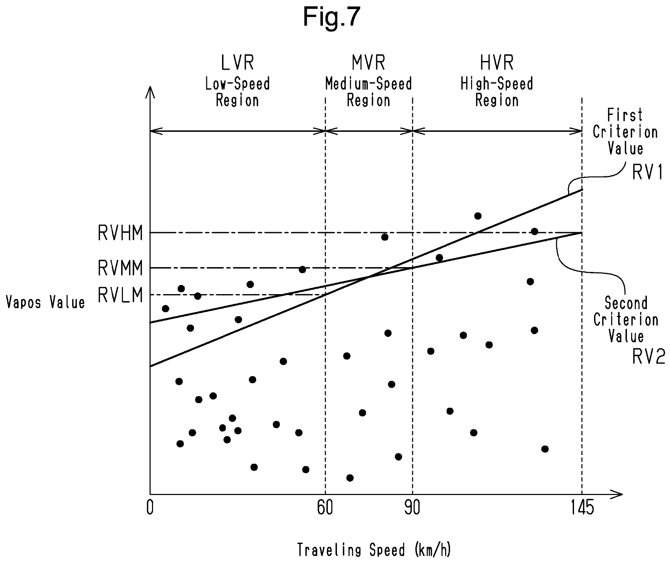

Unlike an external device that performs a determination using the simple pass rate SmOR, the data acquisition device 50 determines whether a maximum threshold pass rate MxOR satisfies the performance condition. The maximum threshold pass rate MxOR is a calculated value calculated by the data acquisition device 50 based on a reference value. The maximum threshold pass rate MxOR will now be described with reference to Fig. 7.

Fig. 7 is a scatter diagram showing the relationship between the traveling speeds acquired by the data acquisition device 50 through a vehicle performance test and Vapos values calculated based on traveling speeds. In Fig. 7, the lines of Equation 2 and Equation 3 showing the functions for calculating the first criterion value RV1 and the second criterion value RV2 are the same as the lines of Equation 2 and Equation 3 of Fig. 4.

As shown in Equations 2 and 3, a criterion value function, which is a function for calculating criterion values, calculates a larger criterion value as the substituted traveling speed increases. Fig. 7 shows maximum values RVLM, RVMM, and RVHM of the criterion values output based on the criterion value function in the respective speed regions.

In Fig. 7, RVLM is the maximum value of the criterion value output in the low-speed region LVR, that is, the low-speed region LVR maximum criterion value. As shown in Fig. 7, the low-speed region maximum criterion value RVLM is an output value of Equation 2 when a speed of 60 km/h is substituted into Equation 2.

In Fig. 7, RVMM is the maximum value of the criterion value output in the medium-speed region MVR, that is, the medium-speed region maximum criterion value. As shown in Fig. 7, the medium-speed region maximum criterion value RVMM is an output value of Equation 3 when a speed of 90 km/h is substituted into Equation 3.

In Fig. 7, RVHM is the maximum value of the criterion value output in the high-speed region HVR; that is, the high-speed region maximum criterion value. As shown in Fig. 7, the high-speed region maximum criterion value RVHM is an output value of Equation 3 when a speed of 145 km/h is substituted into Equation 3.

After calculating the Vapos value, the data acquisition device 50 compares the calculated Vapos value with the maximum criterion value output in the speed region identified as a speed region to which the traveling speed corresponding to the Vapos value belongs. The maximum threshold pass rate MxOR is a ratio of a number NVa of Vapos values that are less than or equal to a maximum criterion value output based on a function in an identified speed region to a total number TNVa of all Vapos values belonging to the identified speed region. In other words, the maximum threshold pass rate MxOR is an at-or-below maximum criterion value ratio. Accordingly, a threshold used to calculate the maximum threshold pass rate MxOR in each speed region is the maximum criterion value for that speed region (one of RVLM, RVMM, or RVHM). That is, the maximum threshold pass rate MxOR is a pass rate calculated by applying, as a threshold for comparison with the Vapos values, the maximum criterion value RVLM, RVMM, or RVHM that can be taken in the identified speed region.

### Manner in Which the Data Acquisition Device 50 Updates the Maximum Threshold Pass Rate MxOR

Each time a Vapos value is calculated, the data acquisition device 50 compares the Vapos value with the maximum criterion value RVLM, RVMM, and RVHM, and calculates the maximum threshold pass rate MxOR. The data acquisition device 50 updates the maximum threshold pass rate MxOR stored in the storage device 52 each time the maximum threshold pass rate MxOR is calculated.

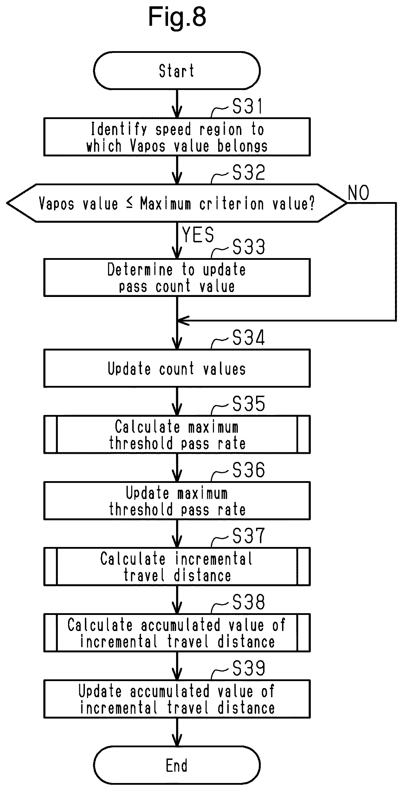

Fig. 8 shows a series of processes executed by the data acquisition device 50 when updating the maximum threshold pass rate MxOR. The series of processes illustrated in Fig. 8 is executed by the processing circuitry 51. The processing circuitry 51 executes the series of processes shown in Fig. 8 each time a Vapos value is calculated during the vehicle performance test of the vehicle 100. In other words, the processing circuitry 51 executes the series of processes illustrated in Fig. 8 after executing the process of S23 in Fig. 5. Therefore, the processing circuitry 51 does not execute the series of processes shown in Fig. 8 when determining that the previous acceleration ACn-1 is less than or equal to the prescribed acceleration ACth in the process of S22 (S22: NO). In Fig. 8, S denotes a step.

Upon starting the series of processes illustrated in Fig. 8, the processing circuitry 51 first executes the process of S31. In the process of S31, the processing circuitry 51 identifies a speed region to which the calculated Vapos value belongs. In Fig. 5, the processing circuitry 51 calculates the previous Vapos value Van-1 based on the previous traveling speed Vn-1 and the previous acceleration ACn-1. In S31, the processing circuitry 51 identifies which of the low-speed region, the medium-speed region, and the high-speed region shown in Fig. 7 the previous traveling speed Vn-1 belongs to.

Thereafter, the processing circuitry 51 executes the process of S32. In the process of S32, the processing circuitry 51 determines whether the Vapos value calculated in the process of S23 is less than or equal to the maximum criterion value RVLM, RVMM, or RVHM in the speed region that has been identified in the process of S31.

When determining that the Vapos value is less than or equal to the maximum criterion value RVLM, RVMM, or RVHM in the process of S32 (S32: YES), the processing circuitry 51 advances the process to S33. In the process of S33, the processing circuitry 51 determines to update a pass reference-value count or a passing Vapos count as a pass count. The passing Vapos count indicates the number of Vapos values that are at or below the maximum criterion value RVLM, RVMM, or RVHM.

After the process of S33, the processing circuitry 51 advances the process to S34. When determining in the process of S32 that the Vapos value is greater than the maximum criterion value (S32: NO), the processing circuitry 51 also advances the process to S34. In the process of S34, the processing circuitry 51 updates the count value.

The data acquisition device 50 stores a pair of count values as count values for each speed region. The pair of count values is a combination of the number of Vapos values belonging to a speed region and the passing Vapos count in that speed region. In the process of S34, the processing circuitry 51 updates the pair of count values in the speed region that has been identified in the process of S31.

When executing the process of S34 after the process of S33, the processing circuitry 51 adds 1 to each of the pair of count values; namely, the total number TNVa of the Vapos values belonging to the speed region and the passing Vapos count NVa in the speed region. When executing the process of S34 after determining that the Vapos value is greater than the maximum criterion value in the process of S32 (S32: NO), the processing circuitry 51 adds 1 only to the total number TNVa of the Vapos values belonging to the speed region, the total number TNVa being one of the pair of count values. In other words, the passing Vapos count NVa in the speed region is not incremented.

After updating the pair of count values, the processing circuitry 51 executes the process of S35. In the process of S35, the processing circuitry 51 calculates the maximum threshold pass rate MxOR in the speed region that has been identified in the process of S31. At this time, the processing circuitry 51 calculates, as the maximum threshold pass rate MxOR, the ratio of the passing Vapos count NVa in the speed region to the total number TNVa of the Vapos values belonging to the speed region in the pair of count values.

Thereafter, the processing circuitry 51 executes the process of S36. In the process of S36, the processing circuitry 51 updates the maximum threshold pass rate MxOR stored in the storage device 52.

The storage device 52 stores the maximum threshold pass rate MxOR calculated during the vehicle performance test for each speed region. The processing circuitry 51 updates the maximum threshold pass rate MxOR for the speed region determined in S31 that is stored in the storage device 52 with the maximum threshold pass rate MxOR calculated in S35.

In this manner, the data acquisition device 50 calculates the maximum threshold pass rate MxOR as a calculated value and updates the maximum threshold pass rate MxOR stored in the storage device 52 each time the traveling speed is acquired during the vehicle performance test of the vehicle 100.

Thereafter, the processing circuitry 51 executes the process of S37. In the process of S37, the processing circuitry 51 calculates an incremental travel distance.

The incremental travel distance is a distance traveled by the vehicle 100 from when the data acquisition device 50 acquires the traveling speed from two measurements earlier Vn-2 to when the data acquisition device 50 acquires the previous traveling speed Vn-1. In other words, the incremental travel distance is an incremental distance at the time point of acquisition of the previous traveling speed Vn-1 by the data acquisition device 50. In the process of S37, the processing circuitry 51 calculates the incremental travel distance based on the traveling speed previously acquired by the data acquisition device 50.

Thereafter, the processing circuitry 51 advances the process to S38. In the process of S38, the processing circuitry 51 calculates an accumulated value of the incremental travel distance. The storage device 52 stores an accumulated incremental travel distance value DS for each speed region during the vehicle performance test of the vehicle 100. In the process of S38, the processing circuitry 51 calculates the accumulated incremental travel distance value DS in the speed region that has been identified in the process of S31, based on the information stored in the storage device 52.

Thereafter, the processing circuitry 51 advances the process to S39. In the process of S39, the processing circuitry 51 updates the accumulated incremental travel distance value DS stored in the storage device 52. At this time, the processing circuitry 51 updates the accumulated incremental travel distance value DS in the speed region that has been identified in the process of S31, which has been stored in the storage device 52, with an accumulated value calculated in the process of S38. Thereafter, the processing circuitry 51 ends the series of processes shown in Fig. 8.

### Performance condition Determination Based on the Maximum Threshold Pass Rate MxOR

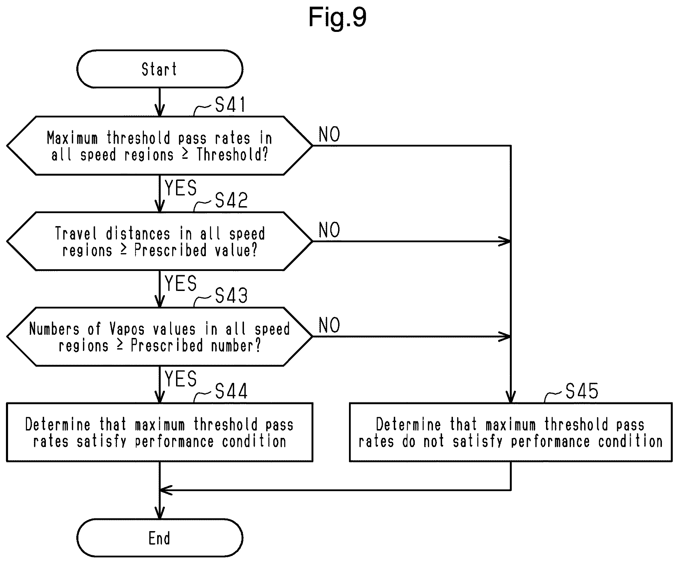

The data acquisition device 50 determines whether the maximum threshold pass rate MxOR satisfies the performance condition after the vehicle performance test of the vehicle 100 is ended. Fig. 9 shows a series of processes executed by the data acquisition device 50 when determining whether the maximum threshold pass rate MxOR satisfies the performance condition. The series of processes shown in Fig. 9 is executed by the processing circuitry 51 after the vehicle performance test of the vehicle 100 is ended. In Fig. 9, S denotes a step.

Upon starting the series of processes illustrated in Fig. 9, the processing circuitry 51 first executes the process of S41. In the process of S41, the processing circuitry 51 determines whether the maximum threshold pass rates MxOR in all the speed regions are greater than or equal to the threshold ORth.

As described with reference to Fig. 8, the storage device 52 stores the maximum threshold pass rate MxOR for each speed region during the vehicle performance test of the vehicle 100. In the process of S41, the processing circuitry 51 checks the maximum threshold pass rate MxOR for each speed region stored in the storage device 52. The processing circuitry 51 determines whether the maximum threshold pass rate MxOR in each speed region is greater than or equal to the threshold ORth. The threshold ORth is, for example, 95%.

When determining that the maximum threshold pass rate MxOR is greater than or equal to the threshold ORth in all the speed regions in the process of S41 (S41: YES), the processing circuitry 51 advances the process to S42. In the process of S42, the processing circuitry 51 determines whether the travel distances of the vehicle 100 in all the speed regions are greater than or equal to the prescribed distance value DSth.

As described with reference to Fig. 8, the storage device 52 stores the accumulated incremental travel distance value DS for each speed region during the vehicle performance test of the vehicle 100. The accumulated incremental travel distance value DS for each speed region corresponds to the travel distance of the vehicle 100 for each speed region. In the process of S42, the processing circuitry 51 checks information stored in the storage device 52 regarding the accumulated incremental travel distance value DS for each speed region. The processing circuitry 51 determines whether the accumulated incremental travel distance value DS in each speed region is greater than or equal to the prescribed distance value DSth. The prescribed distance value DSth is, for example, 16 km.

The processing circuitry 51 determines that the travel distances of the vehicle 100 in all the speed regions are greater than or equal to the prescribed distance value DSth when the accumulated incremental travel distance values DS in all the speed regions are greater than or equal to the prescribed distance value DSth. When determining in the process of S42 that the travel distances in all the speed regions of the vehicle 100 are greater than or equal to the prescribed distance value DSth (S42: YES), the processing circuitry 51 advances the process to S43. In the process of S43, the processing circuitry 51 determines whether the total number TNVa of the Vapos values in each of the speed regions LVR, MVR, and HVR is greater than or equal to a prescribed number VaNth. That is, the processing circuitry 51 determines whether the total number TNVa of Vapos values for each of the speed regions LVR, MVR, and HVR is greater than or equal to the prescribed number VaNth in all the speed regions LVR, MVR, and HVR.

As described with reference to Fig. 8, the storage device 52 stores a pair of count values for each speed region during the vehicle performance test of the vehicle 100. In the process of S43, the processing circuitry 51 checks the information of the total number of the Vapos values belonging to the speed region contained in the pair of count values. The processing circuitry 51 determines whether the total number of the Vapos values belonging to each of the speed regions is greater than or equal to the prescribed number VaNth.

When determining that the total numbers of the Vapos values in all the speed regions are greater than or equal to the prescribed number VaNth in the process of S43 (S43: YES), the processing circuitry 51 advances the process to S44. In the process of S44, the processing circuitry 51 determines that the maximum threshold pass rate MxOR satisfies the performance condition. Thereafter, the processing circuitry 51 ends the series of processes shown in Fig. 9.

In the process of S41, when the maximum threshold pass rate MxOR in at least one of the speed regions is less than the threshold ORth, the processing circuitry 51 determines that the condition is not satisfied that the maximum threshold pass rates MxOR in all the speed regions are greater than or equal to the threshold ORth. When determining that the conditions are not satisfied in the process of S41 (S41: NO), the processing circuitry 51 advances the process to S45.

In the process of S42, the processing circuitry 51 determines that the condition is not satisfied that the travel distances of the vehicle 100 in all the speed regions are greater than or equal to the prescribed distance value DSth when the accumulated incremental travel distance value DS in at least one of the speed regions is less than the prescribed distance value DSth. When determining that the condition is not satisfied in the process of S42 (S42: NO), the processing circuitry 51 advances the process to S45.

In the process of S43, the processing circuitry 51 determines that the condition is not satisfied that the total numbers of the Vapos values in all the speed regions are greater than or equal to the prescribed number VaNth when the total number of the Vapos values belonging to at least one of the speed regions is less than the prescribed number VaNth. When determining that the condition is not satisfied in the process of S43 (S43: NO), the processing circuitry 51 advances the process to S45.

In the process of S45, the processing circuitry 51 determines that the maximum threshold pass rate MxOR does not satisfy the performance condition. Thereafter, the processing circuitry 51 ends the series of processes shown in Fig. 9.

In this manner, the data acquisition device 50 calculates the maximum threshold pass rate MxOR and updates the maximum threshold pass rate MxOR stored in the storage device 52 when the traveling speed is acquired during the vehicle performance test of the vehicle 100. The data acquisition device 50 determines whether the maximum threshold pass rate MxOR satisfies the performance condition after the vehicle performance test of the vehicle 100 is ended.

Since the present embodiment uses the maximum threshold pass rate MxOR, the Vapos value is compared with the maximum criterion value. Therefore, the Vapos value is likely to be compared with a value greater than the criterion value in the simple pass rate SmOR. As a result, the value of the maximum threshold pass rate MxOR is likely to be output to be greater than the value of the simple pass rate SmOR. Thus, using the maximum threshold pass rate MxOR is more likely to be determined to satisfy the performance condition than using the simple pass rate SmOR.

On the other hand, when the Vapos value is relatively large, exhaust components such as nitrogen oxides are more likely to be emitted. Therefore, when the exhaust component analysis is performed after it is determined that the vehicle performance test satisfies the performance condition using the maximum threshold pass rate MxOR, the exhaust components are analyzed using the data acquired when the vehicle 100 runs in a manner in which the exhaust gas component such as nitrogen oxide is readily emitted. In other words, exhaust analysis performed after determining satisfaction of the performance condition using the maximum threshold pass rate MxOR tends to yield poorer analysis results than exhaust analysis performed after determining satisfaction of the performance condition using the simple pass rate SmOR. Accordingly, when exhaust component analysis is performed after determining that the maximum threshold pass rate MxOR satisfies the performance condition, it becomes more difficult to satisfy emission standards. In other words, the emission standards are not easily satisfied. Thus, when exhaust component analysis is performed after determining satisfaction of the performance condition using the maximum threshold pass rate MxOR, it is unlikely that a vehicle that does not satisfy the emission standards will pass evaluation by the exhaust component analysis and be sold. That is, the present embodiment enhances the reliability of emission standards.

### Manner in Which the Data Acquisition Device 50 Updates the RPA Value

The data acquisition device 50 calculates the RPA value after executing the series of processes illustrated in Fig. 5. Each time the RPA value is calculated, the data acquisition device 50 updates the RPA value stored in the storage device 52.

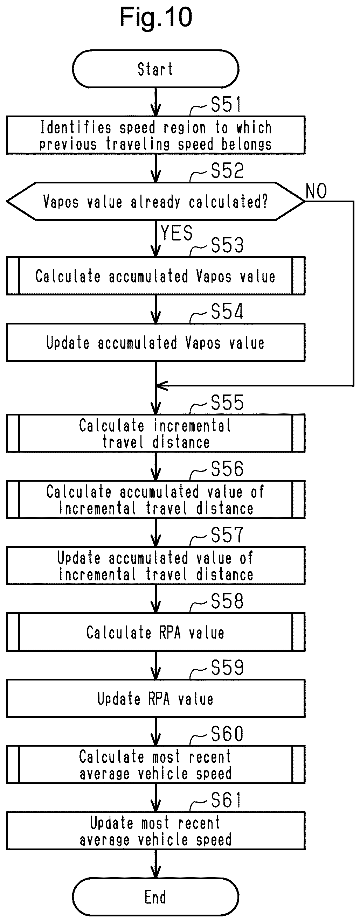

Fig. 10 shows a series of processes executed by the data acquisition device 50 when updating the RPA value. The series of processes illustrated in Fig. 10 is executed by the processing circuitry 51. The processing circuitry 51 executes a series of processes shown in Fig. 10 each time the series of processes shown in Fig. 5 is executed during the vehicle performance test of the vehicle 100. In Fig. 10, S denotes a step.

Upon starting the series of processes illustrated in Fig. 10, the processing circuitry 51 first executes the process of S51. In the process of S51, the processing circuitry 51 identifies a speed region to which the previous traveling speed Vn-1 belongs.

Thereafter, the processing circuitry 51 executes the process of S52. In the process of S52, the processing circuitry 51 determines whether the Vapos value has been calculated in the series of processes shown in Fig. 5. In other words, in the process of S52, the processing circuitry 51 determines that the previous acceleration ACn-1 is greater than the prescribed acceleration ACth in the process of S22 (S22: YES), and determines whether the process of S23 has been executed.

In the process of S52, when determining that the Vapos value has been calculated (S52: YES), the processing circuitry 51 advances the process to S53. The processing circuitry 51 calculates an accumulated Vapos value VaS in the process of S53.

The storage device 52 stores the accumulated Vapos value VaS calculated during the running test of the vehicle 100 for each speed region. In the process of S53, the processing circuitry 51 calculates the accumulated Vapos value VaS by adding the Vapos value calculated in Fig. 5 by the processing circuitry 51 and the accumulated Vapos value VaS in the speed region to which the Vapos value belongs stored in the storage device 52.

Thereafter, the processing circuitry 51 advances the process to S54. In the process of S54, the processing circuitry 51 updates the accumulated Vapos value VaS stored in the storage device 52. At this time, the processing circuitry 51 updates the accumulated Vapos value VaS in the speed region that has been identified in the process of S51 with an accumulated value calculated in the process of S53.

In the process of S52, when determining that the Vapos value has not been calculated (S52: NO), the processing circuitry 51 advances the process to S55. After executing the process of S54, the processing circuitry 51 advances the process to S55.

In the process of S55, the processing circuitry 51 calculates an incremental travel distance. The manner in which the processing circuitry 51 calculates the incremental travel distance at this time is the same as the manner in which the processing circuitry 51 executes the process of S37 of Fig. 8. Accordingly, if the processing circuitry 51 has executed the process of S37 before the process of S55, the processing circuitry 51 does not necessarily need to execute the process of S55.

Thereafter, the processing circuitry 51 advances the process to S56. In the process of S56, the processing circuitry 51 calculates the accumulated incremental travel distance value DS. As described above, the storage device 52 stores the accumulated incremental travel distance value DS for each speed region. The manner in which the processing circuitry 51 calculates the accumulated incremental travel distance value DS at this time is the same as the manner in which the processing circuitry 51 executes the process of S38 of Fig. 8. Accordingly, if the processing circuitry 51 has executed the process of S38 before the process of S56, the processing circuitry 51 does not necessarily need to execute the process of S56.

Thereafter, the processing circuitry 51 advances the process to S57. In the process of S57, the processing circuitry 51 updates the accumulated incremental travel distance value DS in the speed region that has been identified in the process of S51 stored in the storage device 52. The manner in which the processing circuitry 51 updates the accumulated incremental travel distance value DS at this time is the same as the manner in which the processing circuitry 51 executes the process of S39 of Fig. 8. Accordingly, if the processing circuitry 51 has executed the process of S39 before the process of S57, the processing circuitry 51 does not necessarily need to execute the process of S57.

Thereafter, the processing circuitry 51 advances the process to S58. In the process of S58, the processing circuitry 51 calculates the RPA value. At this time, the processing circuitry 51 calculates the RPA value in the speed region that has been identified in the process of S51.

When determining that the Vapos value has been calculated in the process of S52 (S52: YES), the processing circuitry 51 calculates the accumulated Vapos value VaS in the process of S53. The processing circuitry 51 then divides, in the process of S56, the accumulated Vapos value VaS by the accumulated incremental travel distance value DS. In the process of S58, the processing circuitry 51 divides the accumulated Vapos value VaS by the accumulated incremental travel distance value DS and uses the quotient as the RPA value.

When the processing circuitry 51 determines that the Vapos value has not been calculated in the process of S52 (S52: NO), the accumulated Vapos value VaS is not updated. In this case, in the process of S58, the processing circuitry 51 calculates, as the RPA value, a quotient obtained by dividing the non-updated accumulated Vapos value VaS stored in the storage device 52 by the accumulated incremental travel distance value DS calculated in the process of S56.

Thereafter, the processing circuitry 51 advances the process to S59. In the process of S59, the processing circuitry 51 updates the RPA value stored in the storage device 52. At this time, the processing circuitry 51 updates the RPA value in the speed region that has been identified in the process of S51 with the RPA value calculated in the process of S58.

Thereafter, the processing circuitry 51 executes the process of S60. The processing circuitry 51 calculates a most recent average vehicle speed in the process of S60.

The storage device 52 stores the average vehicle speed during the vehicle performance test for each speed region. In the process of S60, the processing circuitry 51 calculates the most recent average vehicle speed in the speed region that has been identified in the process of S51. The most recent average vehicle speed is calculated using the following equation. $VNavg = \left(V1\div NC\right) + \left\{VPavg\times \left(NC-1\right)\div NC\right\}$

In Equation 5, VNavg denotes the most recent average vehicle speed in the speed region which has been identified in the process of S51.

In Equation 5, V1 is the previously acquired traveling speed of the vehicle 100. That is, V1 corresponds to Vn-1 in Fig. 6.

In Equation 5, VPavg denotes the average vehicle speed in the speed region that has been identified in the process of S51, which is currently stored in the storage device 52. That is, VPavg denotes the most recent average vehicle speed before the V1 in Equation 5 is acquired.

In Equation 5 described above, NC denotes an iteration number of the most recent average vehicle speed calculation including the present calculation. In other words, NC is the number of times traveling speeds belonging to the speed region that has been identified in the process of S51.

In Equation 5 described above, NC-1 denotes an iteration number of the most recent average vehicle speed calculation that does not include the current calculation. In Equation 5, the product of VPavg and NC-1 denotes an accumulated traveling speed value excluding V1 in the speed region that has been identified in the process of S51. In other words, Equation 5 calculates, as the average vehicle speed VNavg during the vehicle performance test in the identified speed region, the sum of the quotient obtained by dividing the previously acquired speed V1 by the number of traveling speed acquisitions NC in the identified speed region and the quotient obtained by dividing, by the number of traveling speed acquisitions NC, an accumulated traveling speed value (VPavg × (NC-1)) in the identified speed region except the previously acquired speed V1.

Thereafter, the processing circuitry 51 executes the process of S61. In the process of S61, the processing circuitry 51 updates the most recent average vehicle speed stored in the storage device 52. At this time, the processing circuitry 51 updates the most recent average vehicle speed in the speed region that has been identified in the process of S51 stored in the storage device 52. Thereafter, the processing circuitry 51 ends the series of processes shown in Fig. 10.

In this manner, the data acquisition device 50 calculates the RPA value and updates the RPA value stored in the storage device 52 each time the traveling speed is acquired during the vehicle performance test of the vehicle 100. In this manner, the data acquisition device 50 calculates the most recent average vehicle speed and updates the most recent average vehicle speed value stored in the storage device 52 each time the traveling speed is acquired during the vehicle performance test of the vehicle 100.

### Performance condition Determination Based on RPA Value

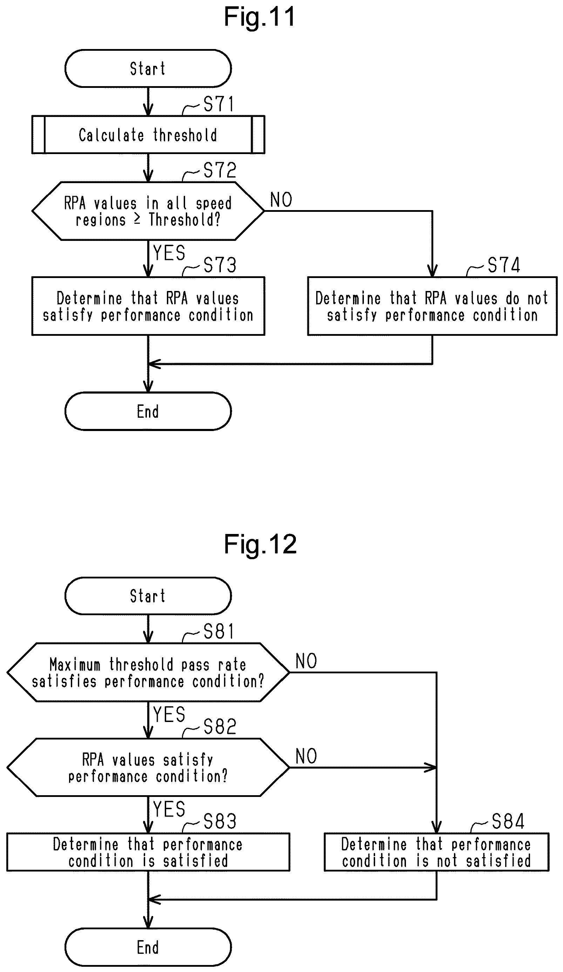

The data acquisition device 50 determines whether the RPA value satisfies the performance condition after the vehicle performance test performed by the vehicle 100 is ended. Fig. 11 shows a series of processes executed by the data acquisition device 50 when determining whether the RPA value satisfies the performance condition. The series of processes shown in Fig. 11 is executed by the processing circuitry 51 after the vehicle performance test of the vehicle 100 is ended. In Fig. 11, S denotes a step.

Upon starting the series of processes illustrated in Fig. 11, the processing circuitry 51 first executes the process of S71. In the process of S71, the processing circuitry 51 calculates an RPA threshold RPAth as an acceleration threshold for each speed region.

As described with reference to Fig. 10, the storage device 52 stores the most recent average vehicle speed for each speed region. The average vehicle speed calculated last for each speed region during the vehicle performance test of the vehicle 100 is the average vehicle speed throughout the entire vehicle performance test in that speed region.

In the process of S71, the processing circuitry 51 calculates the RPA threshold RPAth based on the most recent average speed for each vehicle speed region stored in the storage device 52 after the end of the running test of the vehicle 100. Specifically, the processing circuitry 51 calculates the RPA threshold RPAth for each speed region based on the average vehicle speed for each speed region stored in the storage device 52 in the manner executed by the external device in the process of S15 in Fig. 2.

Thereafter, the processing circuitry 51 advances the process to S72. In the process of S72, the processing circuitry 51 determines whether the RPA values in all the speed regions are greater than or equal to the RPA threshold RPAth.

As described with reference to Fig. 10, the storage device 52 stores the RPA value for each speed region during the vehicle performance test of the vehicle 100. In the process of S72, the processing circuitry 51 checks the information of the RPA value for each speed region stored in the storage device 52. The processing circuitry 51 determines whether the RPA value in each of the speed regions is greater than or equal to the RPA threshold RPAth calculated in the process of S71.

When determining that the RPA values in all the speed regions are greater than or equal to the RPA threshold RPAth in the process of S72 (S72: YES), the processing circuitry 51 advances the process to S73. In the process of S73, the processing circuitry 51 determines that the RPA values satisfy the performance condition. Thereafter, the processing circuitry 51 ends the series of processes shown in Fig. 11.

When determining the condition that the RPA values in all the speed regions are greater than or equal to the RPA threshold RPAth in the process of S72 is not satisfied (S72: NO), the processing circuitry 51 advances the process to S74. In the process of S74, the processing circuitry 51 determines that the RPA values do not satisfy the performance condition. Thereafter, the processing circuitry 51 ends the series of processes shown in Fig. 11.

### Final Determination by the Data Acquisition Device 50

After performing the performance condition determination based on the maximum threshold pass rate MxOR and the performance condition determination based on the RPA value, the data acquisition device 50 performs a final determination as to whether the manner in which the vehicle performance test of the vehicle 100 is conducted satisfies the performance condition. Fig. 12 shows a series of processes executed by the data acquisition device 50 when making a final determination. After the end of the vehicle performance test of the vehicle 100, the processing circuitry 51 executes a series of processes shown in Figs. 9 and 11, and then executes a series of processes shown in Fig. 12.

Upon starting the series of processes illustrated in Fig. 12, the processing circuitry 51 first executes the process of S81. In the process of S81, the processing circuitry 51 determines whether the maximum threshold pass rate MxOR satisfies the performance condition.

If the processing circuitry has executed the process of S44 of Fig. 9, the processing circuitry 51 determines that the maximum threshold pass rate MxOR satisfies the performance condition in the process of S81. When determining that the maximum threshold pass rate MxOR satisfies the performance condition in the process of S81 (S81: YES), the processing circuitry 51 advances the process to S82. In the process of S82, the processing circuitry 51 determines whether the RPA value satisfies the performance condition.

If the processing circuitry has executed the process of S73 of Fig. 11, the processing circuitry 51 determines that the RPA value satisfies the performance condition in the process of S82. When determining that the RPA value satisfies the performance condition in the process of S82 (S82: YES), the processing circuitry 51 advances the process to S83. In the process of S83, the processing circuitry 51 determines that the manner in which the vehicle performance test of the vehicle 100 is conducted satisfies the performance condition. Thereafter, the processing circuitry 51 ends the series of processes shown in Fig. 12.

If the processing circuitry has executed the process of S45 of Fig. 9, the processing circuitry 51 determines that the maximum threshold pass rate MxOR does not satisfy the performance condition in the process of S81. When determining that the maximum threshold pass rate MxOR does not satisfy the performance condition in the process of S81 (S81: NO), the processing circuitry 51 advances the process to S84.

If the processing circuitry has executed the process of S74 of Fig. 11, the processing circuitry 51 determines that the RPA value does not satisfy the performance condition in the process of S82. When determining that the RPA value does not satisfy the performance condition in the process of S82 (S82: NO), the processing circuitry 51 advances the process to S84.

In the process of S84, the processing circuitry 51 determines that the manner in which the vehicle performance test of the vehicle 100 is conducted does not satisfy the performance condition. Thereafter, the processing circuitry 51 ends the series of processes shown in Fig. 12.

### Operation of the First Embodiment

The data acquisition device 50 calculates an acceleration and calculates a Vapos value, which is a reference value, each time the traveling speed is acquired during the vehicle performance test. Each time the Vapos value is calculated, the data acquisition device 50 updates the calculated value obtained based on the Vapos value. After the end of the vehicle performance test, the data acquisition device 50 checks whether the performance condition is satisfied based on the stored calculated value.

In this manner, the data acquisition device 50 updates the calculated values used for the determination each time the traveling speed is acquired. Accordingly, the data acquisition device 50 only needs to store the updated calculated values. The data acquisition device 50 does not need to continuously record all the data used for calculating the calculated value until the end of the vehicle performance test.

### Advantages of the First Embodiment

(1-1) The data acquisition device 50 can determine whether the manner in which the vehicle performance test is conducted satisfies the specified performance condition without requiring a relatively large storage capacity.

(1-2) Each time a traveling speed is acquired during the vehicle performance test, the processing circuitry 51 determines which speed region of the multiple divided speed regions the previously acquired speed belongs to. Each time a traveling speed is acquired during the vehicle performance test, the processing circuitry 51 determines whether the reference value is less than or equal to the maximum value by comparing the reference value calculated for the previously acquired speed with the maximum value output in the speed region that has been identified by the function that outputs a larger criterion value as the substituted traveling speed increases. Each time a traveling speed is acquired during the vehicle performance test, the processing circuitry 51 updates, as the calculated value, the ratio of the number of reference values less than or equal to the maximum value to the total number of reference values stored in the storage device 52 for each speed region. In other words, the processing circuitry 51 updates the maximum threshold pass rate MxOR. The processing circuitry 51 checks the information stored in the storage device 52 after the end of the vehicle performance test, thereby determining that the manner in which the vehicle performance test is conducted satisfies the performance condition when the calculated values in all the speed regions are greater than or equal to the threshold ORth. The processing circuitry 51 checks the information stored in the storage device 52 after the end of the vehicle performance test, thereby determining that the manner in which the vehicle performance test is conducted does not satisfy the performance condition when the calculated value in at least one of the speed regions is less than the threshold ORth.

During the vehicle performance test, the data acquisition device 50 performs the determination obtained by comparing the Vapos value with a maximum possible value of the criterion value and sequentially updates the calculated value. After the vehicle performance test is ended, the data acquisition device 50 checks whether the manner in which the vehicle performance test is conducted satisfies the performance condition based on the calculated value. Accordingly, the data acquisition device 50 can determine whether the manner in which the vehicle performance test is conducted satisfies the performance condition based on the calculated value without providing a relatively large storage capacity.

(1-3) The processing circuitry 51 calculates an incremental travel distance each time a traveling speed is acquired during the vehicle performance test. The incremental travel distance is a distance traveled by the vehicle 100 from when the traveling speed from two measurements earlier Vn-2 is acquired to when the previous traveling speed Vn-1 is acquired. Each time the traveling speed is acquired during the vehicle performance test, the processing circuitry 51 determines which speed region the previously acquired speed belongs to. Each time the traveling speed is acquired during the vehicle performance test, the processing circuitry 51 updates the accumulated incremental travel distance value DS, which has been calculated for the traveling speed belonging to the speed region stored in the storage device 52 for each speed region. After the vehicle performance test is ended, the processing circuitry 51 checks the information stored in the storage device 52. When the accumulated incremental travel distance value DS in at least any one of the speed regions is less than or equal to the prescribed distance value DSth, the processing circuitry 51 determines that the manner in which the vehicle performance test is conducted does not satisfy the performance condition even if the at-or-below maximum criterion value ratios in all the speed regions are greater than or equal to the threshold ORth.

During the vehicle performance test, data related to exhaust gas is acquired. When the data acquisition device 50 determines that the performance condition is satisfied, exhaust gas analysis may be performed. The accumulated incremental travel distance value DS for each speed region represents the travel distance of the vehicle 100 for each speed region. For example, if the travel distance of the vehicle 100 is too short, there may be insufficient evaluation material used for exhaust analysis for a period during which the vehicle 100 traveled at a traveling speed belonging to that speed region. In contrast, in the present embodiment, when the accumulated incremental travel distance value DS in any speed region is relatively small, the data acquisition device 50 determines that the performance condition is not satisfied. Accordingly, the data acquisition device 50 improves the accuracy of exhaust gas analysis.

(1-4) When the number of the reference values in any one of the speed regions is less than or equal to the prescribed number VaNth, the processing circuitry 51 determines that the manner in which the vehicle performance test is conducted does not satisfy the performance condition even when the at-or-below maximum criterion value ratios in all the speed regions are greater than or equal to the threshold ORth.

During the vehicle performance test, data related to exhaust gas is acquired. When the data acquisition device 50 determines that the performance condition is satisfied, exhaust gas analysis may be performed. For example, when the total number of Vapos values stored for each speed region is relatively small, there may be insufficient evaluation material used for exhaust gas analysis for the period during which the vehicle 100 travels at a traveling speed belonging to that speed region, in which the total number of the Vapos values is relatively small. In contrast, when the total number of Vapos values in any speed region is relatively small, the data acquisition device 50 of the present embodiment determines that the performance condition is not satisfied. Accordingly, the data acquisition device 50 improves the accuracy of exhaust gas analysis.

(1-5) Each time a traveling speed is acquired during the vehicle performance test, the processing circuitry 51 determines which speed region of the multiple divided speed regions the previously acquired speed belongs to. Each time a traveling speed is acquired during the vehicle performance test, the processing circuitry 51 calculates the accumulated reference value VaS in the speed region that has been identified. Each time a traveling speed is acquired during the vehicle performance test, the processing circuitry 51 calculates an incremental travel distance, which is the distance traveled by the vehicle 100 from the acquisition of the traveling speed from two measurements earlier Vn-2 to the acquisition of the previous traveling speed Vn-1. Each time a traveling speed is acquired during the vehicle performance test, the processing circuitry 51 calculates the accumulated incremental travel distance value DS in the speed region that has been identified. Each time a traveling speed is acquired during the vehicle performance test, the processing circuitry 51 updates, as the calculated value, the quotient obtained by dividing the accumulated reference value VaS stored in the storage device 52 for each speed region by the accumulated incremental travel distance value DS. Each time the traveling speed is acquired during the vehicle performance test, the processing circuitry 51 calculates, as the average vehicle speed during the vehicle performance test in the identified speed region, the sum of the quotient obtained by dividing the previously acquired speed by the number of the traveling speed acquisitions in the identified speed region and the quotient obtained by dividing, by the number of traveling speed acquisitions, the accumulated traveling speed value in the identified speed region except the previously acquired speed. Each time the traveling speed is acquired during the vehicle performance test, the processing circuitry 51 updates the average vehicle speed stored in the storage device 52 for each speed region. After the end of the vehicle performance test, the processing circuitry 51 checks the information stored in the storage device 52 and substitutes the average vehicle speed calculated last during the vehicle performance test into the function, thereby calculating the threshold for each speed region. The processing circuitry 51 checks the information stored in the storage device 52 after the end of the vehicle performance test, thereby determining that the manner in which the vehicle performance test is conducted satisfies the performance condition when the calculated values in all the speed regions are greater than or equal to the threshold ORth. The processing circuitry 51 checks the information stored in the storage device 52 after the end of the vehicle performance test, thereby determining that the manner in which the vehicle performance test is conducted does not satisfy the performance condition when the calculated value in at least one of the speed regions is less than the threshold ORth.

During the vehicle performance test, the data acquisition device 50 calculates the accumulated Vapos value VaS and the accumulated incremental travel distance value DS, and updates the calculated values stored in the storage device 52. Further, during the vehicle performance test, the data acquisition device 50 calculates the current average vehicle speed and updates the average vehicle speed stored in the storage device 52. After the vehicle performance test is ended, the data acquisition device 50 determines whether the manner in which the vehicle performance test is conducted satisfies the performance condition based on the calculated value and the average vehicle speed. Accordingly, the data acquisition device 50 can determine whether the manner in which the vehicle performance test is conducted satisfies the performance condition based on the calculated value without providing a relatively large storage capacity.

(1-6) The processing circuitry 51 does not calculate the reference value when the acceleration at the time point of acquiring the previous traveling speed Vn-1 is less than or equal to the prescribed acceleration ACth.

When data related to exhaust gas is acquired during the vehicle performance test and the data acquisition device 50 determines that the performance condition is satisfied, the exhaust gas may be analyzed.

When the vehicular acceleration is relatively low, the Vapos value tends to be relatively small. If a relatively small Vapos value is included in the values to be evaluated, a determination based on the calculated value as to whether the performance condition is satisfied tends to result in a determination that the performance condition is satisfied.

Further, when the vehicle acceleration is relatively low, the amount of nitrogen oxides emitted from the vehicle 100 decreases. Accordingly, if the vehicle 100 travels for a relatively long period of time in a state in which the acceleration is relatively low, it is difficult to accurately evaluate the influence of the exhaust gas emitted from the vehicle 100 on the environment.

In contrast, the data acquisition device 50 of the present embodiment does not calculate the Vapos value when the acceleration is less than or equal to the prescribed acceleration ACth. When the data acquisition device 50 does not calculate the Vapos value, the traveling speed at the time of calculation of the acceleration is not determined based on the calculated value.

Accordingly, the data acquisition device 50 is prevented from collecting inappropriate data that makes it difficult to correctly evaluate the impact of exhaust on the environment. Further, since the data acquisition device 50 does not calculate the Vapos value, the calculated value based on the Vapos value is also not calculated. This allows the data acquisition device 50 to reduce the number of arithmetic operations performed.

(1-7) The data acquisition device 50 is implemented by one or more of onboard electronic control units of the vehicle 100. That is, one or more of the onboard electronic control units of the vehicle 100 perform the functions of the data acquisition device 50. Accordingly, during the vehicle performance test, whether the manner in which the vehicle performance test is conducted satisfies the performance condition can be determined without using an external device capable of storing a large amount of data.

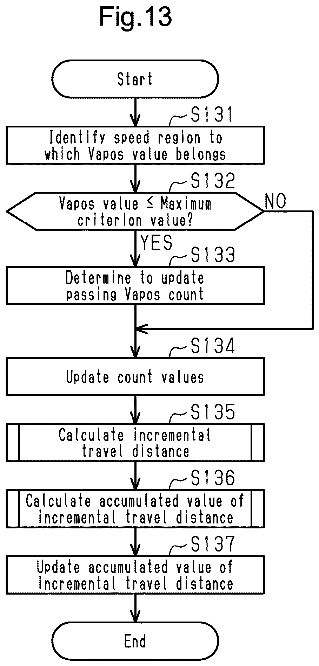

Figs. 13 to 16 illustrate a second embodiment of the present disclosure. Unlike the first embodiment, the data acquisition device 50 of the second embodiment updates the pair of count values as calculated values during the vehicle performance test of the vehicle 100. The pair of count values is a combination of the number of Vapos values belonging to a speed region and the passing Vapos count in that speed region. Unlike the first embodiment, the data acquisition device 50 of the second embodiment updates the accumulated Vapos value VaS and the accumulated incremental travel distance value DS as calculated values during the vehicle performance test of the vehicle 100. The description hereafter will focus on the differences of the second embodiment from the first embodiment, and the same aspects will not be described in detail.

### Manner in Which the Data Acquisition Device 50 Updates the Pair of Count Values

Each time the data acquisition device 50 of the second embodiment calculates the Vapos value, the data acquisition device 50 compares the Vapos value with the maximum criterion value to perform a determination, and updates the pair of count values.

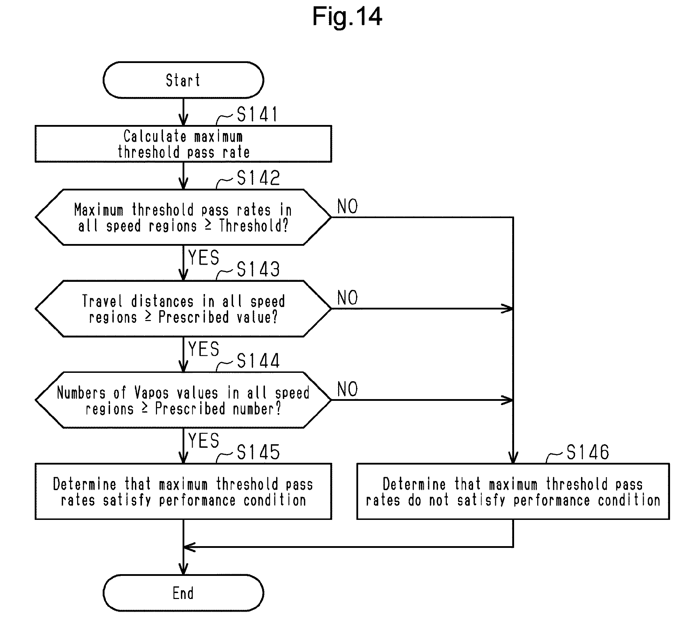

Fig. 13 shows a series of processes executed by the data acquisition device 50 when updating the pair of count values. The series of processes illustrated in Fig. 13 is executed by the processing circuitry 51. The processing circuitry 51 executes the series of processes shown in Fig. 13 each time a Vapos value is calculated during the vehicle performance test of the vehicle 100. The data acquisition device 50 of the second embodiment executes a series of processes shown in Fig. 13 instead of the series of processes shown in Fig. 8. In Fig. 13, S denotes a step. Specifically, the procedure of Fig. 13 is equivalent to the procedure of Fig. 8, except that the processes of S35 to S37 for calculating and updating the maximum threshold pass rate MxOR are omitted. The process of calculating the maximum threshold pass rate MxOR is executed at the beginning of Fig. 14.

Upon starting the series of processes illustrated in Fig. 13, the processing circuitry 51 first executes the process of S131. In the process of S131, the processing circuitry 51 identifies a speed region to which the calculated Vapos value belongs. This process is the same as the process executed by the processing circuitry 51 in the process of S31 of Fig. 8.

Thereafter, the processing circuitry 51 executes the process of S132. In the process of S132, the processing circuitry 51 determines whether the Vapos value calculated in the process of S23 is less than or equal to the maximum criterion value in the speed region identified in the process of S131.

When determining that the Vapos value is less than or equal to the maximum criterion value in the process of S132 (S132: YES), the processing circuitry 51 advances the process to S133. In the process of S133, the processing circuitry 51 determines to update the passing Vapos count. This process is the same as the process executed by the processing circuitry 51 in the process of S33 of Fig. 8.

After the process of S133, the processing circuitry 51 advances the process to S134. When determining in the process of S132 that the Vapos value is greater than the maximum criterion value (S32: NO), the processing circuitry 51 also advances the process to S134. In the process of S134, the processing circuitry 51 updates the pair of count values. This process is the same as the process executed by the processing circuitry 51 in the process of S34 of Fig. 8.

After updating the pair of count values, the processing circuitry 51 executes the process of S135. In the process of S135, the processing circuitry 51 calculates an incremental travel distance. This process is the same as the process executed by the processing circuitry 51 in the process of S37 of Fig. 8.

Thereafter, the processing circuitry 51 advances the process to S136. In the process of S136, the processing circuitry 51 calculates the accumulated incremental travel distance value DS. This process is the same as the process executed by the processing circuitry 51 in the process of S38 of Fig. 8.

Thereafter, the processing circuitry 51 advances the process to S137. In the process of S137, the processing circuitry 51 updates the accumulated incremental travel distance value DS stored in the storage device 52. This process is the same as the process executed by the processing circuitry 51 in the process of S39 of Fig. 8. Thereafter, the processing circuitry 51 ends the series of processes shown in Fig. 13.

### Performance condition Determination Based on the Maximum Threshold Pass Rate MxOR

The data acquisition device 50 of the second embodiment determines whether the maximum threshold pass rate MxOR satisfies the performance condition after the vehicle performance test of the vehicle 100 is ended. Fig. 14 shows a series of processes executed by the data acquisition device 50 when determining whether the maximum threshold pass rate MxOR satisfies the performance condition. The series of processes shown in Fig. 14 is executed by the processing circuitry 51 after the vehicle performance test of the vehicle 100 is ended. The data acquisition device 50 of the second embodiment executes a series of processes shown in Fig. 14 instead of the series of processes shown in Fig. 9. In Fig. 14, S denotes a step. Specifically, the procedure of Fig. 14 is equivalent to the procedure of Fig. 9, except that the process of S141 for calculating the maximum threshold pass rate MxOR is added at the beginning.

Upon starting the series of processes illustrated in Fig. 14, the processing circuitry 51 first executes the process of S141. In the process of S141, the processing circuitry 51 calculates the maximum threshold pass rate MxOR. At this time, the processing circuitry 51 calculates the maximum threshold pass rate MxOR for each speed region based on the pair of count values.

Thereafter, the processing circuitry 51 executes the process of S142. In the process of S142, the processing circuitry 51 determines whether the maximum threshold pass rates MxOR in all the speed regions are greater than or equal to the threshold ORth.

That is, in the process of S142, the processing circuitry 51 determines, for each speed region, whether the maximum threshold pass rate MxOR calculated in the process of S141 is greater than or equal to the threshold ORth. The threshold ORth is, for example, 95%.

When determining that the maximum threshold pass rate MxOR is greater than or equal to the threshold ORth in all the speed regions in the process of S142 (S142: YES), the processing circuitry 51 advances the process to S143. In the process of S143, the processing circuitry 51 determines whether the travel distances of the vehicle 100 in all the speed regions are greater than or equal to the prescribed distance value DSth. This process is the same as the process executed by the processing circuitry 51 in the process of S42 of Fig. 9.

When determining in the process of S143 that the travel distances in all the speed regions of the vehicle 100 are greater than or equal to the prescribed distance value DSth (S143: YES), the processing circuitry 51 advances the process to S144. In the process of S144, the processing circuitry 51 determines whether the total number of Vapos values in all the speed regions is greater than or equal to the prescribed number VaNth. That is, the processing circuitry 51 determines whether the total number of Vapos values for each speed region is greater than or equal to the prescribed number VaNth. This process is the same as the process executed by the processing circuitry 51 in the process of S43 of Fig. 9.

When determining that the total numbers of the Vapos values in all the speed regions are greater than or equal to the prescribed number VaNth in the process of S144 (S144: YES), the processing circuitry 51 advances the process to S145. In the process of S145, the processing circuitry 51 determines that the maximum threshold pass rate MxOR satisfies the performance condition. Thereafter, the processing circuitry 51 ends the series of processes shown in Fig. 14.

When determining in the process of S142 that the condition that the maximum threshold pass rate MxOR is greater than or equal to the threshold ORth in all the speed regions is not satisfied (S142: NO), the processing circuitry 51 advances the process to S146. When determining in the process of S143 that the condition that the travel distances of the vehicle 100 in all the speed regions are greater than or equal to the prescribed distance value DSth is not satisfied (S143: NO), the processing circuitry 51 advances the process to S146. When determining in the process of S144 that the condition that the total number of the Vapos values in all the speed regions is greater than or equal to the prescribed number VaNth is not satisfied (S144: NO), the processing circuitry 51 also advances the process to S146. In the process of S146, the processing circuitry 51 determines that the maximum threshold pass rate MxOR does not satisfy the performance condition. Thereafter, the processing circuitry 51 ends the series of processes shown in Fig. 14.

### Manner in Which the Data Acquisition Device 50 Updates the Accumulated Vapos Value VaS and the Accumulated Incremental Travel Distance Value DS

After executing the series of processes shown in Fig. 5, the data acquisition device 50 of the second embodiment calculates the accumulated Vapos value VaS and the accumulated incremental travel distance value DS as the calculated values. Each time the data acquisition device 50 calculates the accumulated Vapos value VaS and the accumulated incremental travel distance value DS, the data acquisition device 50 updates the calculated values stored in the storage device 52.

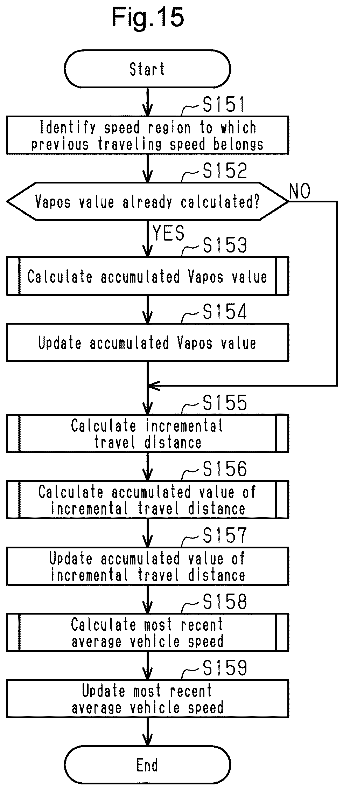

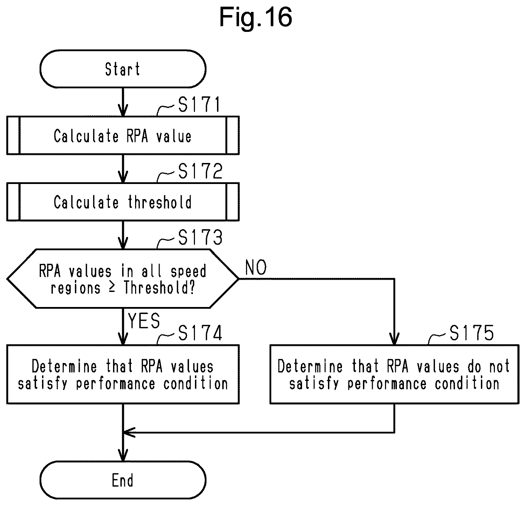

Fig. 15 shows a series of processes executed by the data acquisition device 50 when updating the accumulated Vapos value VaS and the accumulated incremental travel distance value DS. The series of processes illustrated in Fig. 15 is executed by the processing circuitry 51. The processing circuitry 51 executes a series of processes shown in Fig. 15 each time the series of processes shown in Fig. 5 is executed during the vehicle performance test of the vehicle 100. The data acquisition device 50 of the second embodiment executes a series of processes shown in Fig. 15 instead of the series of processes shown in Fig. 10. In Fig. 15, S denotes a step. Specifically, the procedure of Fig. 15 is equivalent to the procedure of Fig. 10, except that the processes of S58 and S59 for calculating and updating the RPA value are omitted. The process of calculating the RPA value is executed at the beginning of Fig. 16.

Upon starting the series of processes illustrated in Fig. 15, the processing circuitry 51 first executes the process of S151. In the process of S151, the processing circuitry 51 identifies a speed region to which the previous traveling speed Vn-1 belongs.

Thereafter, the processing circuitry 51 executes the process of S152. In the process of S152, the processing circuitry 51 determines whether the Vapos value has been calculated in the series of processes shown in Fig. 5.

In the process of S152, when determining that the Vapos value has been calculated (S152: YES), the processing circuitry 51 advances the process to S153. The processing circuitry 51 calculates an accumulated Vapos value VaS in the process of S153. This process is the same as the process executed by the processing circuitry 51 in the process of S53 of Fig. 10.

Thereafter, the processing circuitry 51 advances the process to S154. In the process of S154, the processing circuitry 51 updates the accumulated Vapos value VaS stored in the storage device 52. This process is the same as the process executed by the processing circuitry 51 in the process of S54 of Fig. 10.

In the process of S152, when determining that the Vapos value has not been calculated (S152: NO), the processing circuitry 51 advances the process to S155. After executing the process of S154, the processing circuitry 51 advances the process to S155.

In the process of S155, the processing circuitry 51 calculates an incremental travel distance. This process is the same as the process executed by the processing circuitry 51 in the process of S55 of Fig. 10.

Thereafter, the processing circuitry 51 advances the process to S156. In the process of S156, the processing circuitry 51 calculates the accumulated incremental travel distance value DS. This process is the same as the process executed by the processing circuitry 51 in the process of S56 of Fig. 10.

Thereafter, the processing circuitry 51 advances the process to S157. In the process of S157, the processing circuitry 51 updates the accumulated incremental travel distance value DS in the speed region that has been identified in the process of S151 stored in the storage device 52. This process is the same as the process executed by the processing circuitry 51 in the process of S57 of Fig. 10.

Thereafter, the processing circuitry 51 advances the process to S158. In the process of S158, the processing circuitry 51 calculates the most recent average vehicle speed. This process is the same as the process executed by the processing circuitry 51 in the process of S60 of Fig. 10.

Thereafter, the processing circuitry 51 executes the process of S159. In the process of S159, the processing circuitry 51 updates the most recent average vehicle speed stored in the storage device 52. This process is the same as the process executed by the processing circuitry 51 in the process of S61 of Fig. 10. Thereafter, the processing circuitry 51 ends the series of processes shown in Fig. 15.

### Performance condition Determination Based on RPA Value

The data acquisition device 50 of the second embodiment determines whether the RPA value satisfies the performance condition after the vehicle performance test performed by the vehicle 100 is ended. Fig. 16 shows a series of processes executed by the data acquisition device 50 when determining whether the RPA value satisfies the performance condition. The series of processes shown in Fig. 16 is executed by the processing circuitry 51 after the vehicle performance test of the vehicle 100 is ended. In other words, the data acquisition device 50 of the second embodiment executes a series of processes shown in Fig. 16 instead of the series of processes shown in Fig. 11. In Fig. 16, S denotes a step. Specifically, the procedure of Fig. 16 is equivalent to the procedure of Fig. 11, except that a process of S171 for calculating the RPA value is added at the beginning.

Upon starting the series of processes illustrated in Fig. 16, the processing circuitry 51 first executes the process of S171. In the process of S171, the processing circuitry 51 calculates the RPA value for each speed region. At this time, the processing circuitry 51 calculates the RPA value based on the information of the accumulated Vapos value VaS and the accumulated incremental travel distance value DS stored in the storage device 52 for each speed region.

Thereafter, the processing circuitry 51 executes the process of S172. In the process of S172, the processing circuitry 51 calculates an RPA threshold RPAth as an acceleration threshold for each speed region. This process is the same as the process executed by the processing circuitry 51 in the process of S71 of Fig. 11.

Thereafter, the processing circuitry 51 advances the process to S173. In the process of S173, the processing circuitry 51 determines whether the RPA values in all the speed regions are greater than or equal to the RPA threshold RPAth. That is, the processing circuitry 51 determines whether the RPA value for each speed region calculated in the process of S171 is greater than or equal to the RPA thresholds RPAth calculated in the process of S172.

When determining that the RPA values in all the speed regions are greater than or equal to the RPA threshold RPAth in the process of S173 (S173: YES), the processing circuitry 51 advances the process to S174. In the process of S174, the processing circuitry 51 determines that the RPA values satisfy the performance condition. Thereafter, the processing circuitry 51 ends the series of processes shown in Fig. 16.

When determining the condition that the RPA values in all the speed regions are greater than or equal to the RPA threshold RPAth in the process of S173 is not satisfied (S173: NO), the processing circuitry 51 advances the process to S175. In the process of S175, the processing circuitry 51 determines that the RPA values do not satisfy the performance condition. Thereafter, the processing circuitry 51 ends the series of processes shown in Fig. 16.

### Operation and Advantages of the Process of Second Embodiment

(2-1) The data acquisition device 50 of the second embodiment has the advantages (1-1), (1-3), (1-4), (1-6), and (1-7) of the first embodiment.

(2-2) Each time a traveling speed is acquired during the vehicle performance test, the processing circuitry 51 determines which speed region of the multiple divided speed regions the previously acquired speed belongs to. Each time the traveling speed is acquired during the vehicle performance test, the processing circuitry 51 determines whether the reference value is less than or equal to the maximum criterion value by comparing the RPA value, which has been calculated as the reference value for the previously acquired speed, with the maximum criterion value output by the criterion value function in the identified speed region. The criterion value function calculates a larger criterion value as the substituted traveling speed increases. Each time the traveling speed is acquired during the vehicle performance test, the processing circuitry 51 updates, as the calculated values, the number of reference values stored in the storage device 52 for each speed region, and the number of reference values less than or equal to the maximum criterion value. After the end of the vehicle performance test, the processing circuitry 51 checks the information stored in the storage device 52 to calculate, for each speed region, an at-or-below maximum criterion value ratio, which is the ratio of the number of reference values less than or equal to the maximum criterion value to the total number of the reference values. The processing circuitry 51 determines that the manner in which the vehicle performance test is conducted satisfies the performance condition when the at-or-below maximum criterion value ratios in all the speed regions are greater than or equal to the threshold ORth after the vehicle performance test is ended. After the end of the vehicle performance test, the processing circuitry 51 determines that the manner in which the vehicle performance test is conducted does not satisfy the performance condition when the at-or-below maximum criterion value ratio in at least one of the speed regions is less than the threshold ORth.

During the vehicle performance test, the data acquisition device 50 performs the determination of comparing the Vapos value with a maximum possible value of the criterion value, and sequentially updates the calculated value. After the vehicle performance test is ended, the data acquisition device 50 checks whether the manner in which the vehicle performance test is conducted satisfies the performance condition based on the calculated value. Accordingly, the data acquisition device 50 can determine whether the manner in which the vehicle performance test is conducted satisfies the performance condition based on the calculated value without providing a relatively large storage capacity.

(2-3) Each time a traveling speed is acquired during the vehicle performance test, the processing circuitry 51 determines which speed region of the multiple divided speed regions the previously acquired speed belongs to. Each time a traveling speed is acquired during the vehicle performance test, the processing circuitry 51 calculates the accumulated reference value VaS in the speed region that has been identified. Each time a traveling speed is acquired during the vehicle performance test, the processing circuitry 51 calculates an incremental travel distance, which is the distance traveled by the vehicle 100 from the acquisition of the traveling speed from two measurements earlier Vn-2 to the acquisition of the previous traveling speed Vn-1. Each time a traveling speed is acquired during the vehicle performance test, the processing circuitry 51 calculates the accumulated incremental travel distance value DS in the speed region that has been identified. Each time the traveling speed is acquired during the vehicle performance test, the processing circuitry 51 updates, as the calculated values, the accumulated reference value VaS and the accumulated incremental travel distance value DS, which are stored in the storage device 52 for each speed region. Each time the traveling speed is acquired during the vehicle performance test, the processing circuitry 51 calculates, as the average vehicle speed VNavg during the vehicle performance test in the identified speed region, the sum of the quotient obtained by dividing the previously acquired speed V1 by the number of traveling speed acquisitions NC in the identified speed region and the quotient obtained by dividing, by the number of traveling speed acquisitions NC, an accumulated traveling speed value (VPavg × (NC-1)) in the identified speed region except the previously acquired speed V1. Each time the traveling speed is acquired during the vehicle performance test, the processing circuitry 51 updates the average vehicle speed stored in the storage device 52 for each speed region. After the end of the vehicle performance test, the processing circuitry 51 checks the information stored in the storage device 52 and substitutes the average vehicle speed calculated last during the vehicle performance test into the function, thereby calculating the threshold for each speed region. After the end of the vehicle performance test, the processing circuitry 51 checks the information stored in the storage device 52 to calculate an average acceleration, which is a quotient obtained by dividing the accumulated reference value VaS by the accumulated incremental travel distance value DS, for each speed region. The processing circuitry 51 determines that traveling by the vehicle 100 satisfies the performance condition when the average accelerations in all the speed regions are greater than or equal to the threshold after the vehicle performance test is ended. The processing circuitry 51 determines that the manner in which the vehicle performance test is conducted does not satisfy the performance condition when the average acceleration in at least one of the speed regions is less than the threshold after the vehicle performance test is ended.

During the vehicle performance test, the data acquisition device 50 calculates the accumulated Vapos value VaS and the accumulated incremental travel distance value DS, and updates the calculated values stored in the storage device 52. Further, during the vehicle performance test, the data acquisition device 50 calculates the current average vehicle speed and updates the average vehicle speed stored in the storage device 52. After the vehicle performance test is ended, the data acquisition device 50 determines whether the manner in which the vehicle performance test is conducted satisfies the performance condition based on the average acceleration calculated from the calculated values and the average vehicle speed. Accordingly, the data acquisition device 50 can determine whether the manner in which the vehicle performance test is conducted satisfies the performance condition based on the calculated value without providing a relatively large storage capacity.

### Other Embodiments

The above-described embodiments may be modified as follows. The above-described embodiments and the following modifications can be combined as long as the combined modifications remain technically consistent with each other.

The speed regions are not limited to the ones shown in Figs. 4 and 7. The low-speed region LVR, the medium-speed region MVR, and the high-speed region HVR need not be divided by the speeds shown in Figs. 4 and 7. Further, the speed regions may be divided into two regions, or may be divided into four or more regions.

The data acquisition device 50 may determine that the maximum threshold pass rate MxOR satisfies the performance condition when the maximum threshold pass rate MxOR is greater than or equal to the threshold ORth in all the speed regions even if the distance traveled by the vehicle 100 in any of the speed regions is not greater than or equal to the prescribed distance value DSth.

The data acquisition device 50 may determine that the maximum threshold pass rate MxOR satisfies the performance condition when the maximum threshold pass rate MxOR is greater than or equal to the threshold ORth in all the speed regions even if the total number of Vapos values in any of the speed regions is not greater than or equal to the prescribed number VaNth.

The data acquisition device 50 may calculate the Vapos value even when the calculated previous acceleration ACn-1 is less than or equal to the prescribed acceleration ACth.

The data acquisition device 50 does not necessarily need to be an electronic control unit mounted on the vehicle 100. For example, the data acquisition device 50 may be an external device carried onboard the vehicle 100.

The data acquisition device is not limited to a device that includes a CPU and ROM and executes software processing. That is, the data acquisition device may have any configuration as long as it has any one of the following configurations (a) to (c). (a) The data acquisition device includes one or more processors that execute various processes in accordance with a computer program. The processor includes a CPU and a memory module, such as RAM and ROM. The memory module stores program codes or instructions configured to cause the CPU to execute the processes. The memory module, which is a non-transitory computer-readable storage medium, includes any type of media that are accessible by general-purpose computers and dedicated computers. The data acquisition device includes one or more dedicated hardware circuits that execute various processes. The dedicated hardware circuits include, for example, an application specific integrated circuit (ASIC) and a field programmable gate array (FPGA). (c) The data acquisition device includes a processor that executes part of various processes according to programs and a dedicated hardware circuit that executes the remaining processes.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A data acquisition device (50) mounted on a vehicle (100), comprising:
processing circuitry (51); and
a storage device (52), wherein
the processing circuitry (51) is configured to perform acquiring a traveling speed of the vehicle (100) multiple times to acquire a currently acquired speed (Vn), a previously acquired speed (Vn-1), and a speed from two measurements earlier (Vn-2),
the processing circuitry (51) is configured to perform, each time the traveling speed is acquired during a vehicle performance test of the vehicle (100):
calculating, based on the speed from two measurements earlier (Vn-2) and the currently acquired speed (Vn), a previous acceleration (ACn-1) as an acceleration of the vehicle (100) at a time point of acquiring the previously acquired speed (Vn-1) (S21);
calculating a reference value (Van-1) that is a product of the previously acquired speed (Vn-1) and the previous acceleration (ACn-1) (S23); and
updating a calculated value (MxOR) stored in the storage device (52) (S36), the calculated value (MxOR) being calculated based on the reference value (Van-1), and
the processing circuitry (51) is configured to perform, after an end of the vehicle performance test, determining whether a manner in which the vehicle performance test is conducted satisfies a performance condition based on the calculated value (MxOR) (S41 to S45).

2. The data acquisition device according to claim 1, wherein
the processing circuitry (51) is configured to perform, each time the traveling speed is acquired during the vehicle performance test:
identifying one of multiple divided speed regions (LVR, MVR, HVR) to which the previously acquired speed (Vn-1) belongs (S31);
determining whether the reference value (Van-1) calculated for the previously acquired speed (Vn-1) is less than or equal to a maximum criterion value (RVLM, RVMM, RVHM) (S32), the maximum criterion value (RVLM, RVMM, RVHM) being a maximum value of multiple criterion values output in the identified speed region (LVR, MVR, HVR) by a function (Equation 2, Equation 3) that outputs a larger criterion value as the traveling speed substituted into the function (Equation 2, Equation 3) increases; and
updating, as the calculated value (MxOR), an at-or-below maximum criterion value ratio stored in the storage device (52) for each of the speed regions (LVR, MVR, HVR) (S36), the at-or-below maximum criterion value ratio (MxOR) being a ratio of a number (NVa) of the reference values (Van-1) less than or equal to the maximum reference value (RVLM, RVMM, RVHM) to a total number (TNVa) of the reference values (Van-1) in the corresponding speed region (LVR, MVR, HVR), and
the processing circuitry (51) is configured to perform, by checking information stored in the storage device (52) after the vehicle performance test is ended:
determining that the manner in which the vehicle performance test is conducted satisfies the performance condition (S44) when the calculated values (MxOR) in all the speed regions (LVR, MVR, HVR) are greater than or equal to a threshold (ORth) (S41: YES); and
determining that the manner in which the vehicle performance test is conducted does not satisfy the performance condition (S45) when the calculated value (MxOR) in at least one of the speed regions (LVR, MVR, HVR) is less than the threshold (ORth) (S41: NO).

3. The data acquisition device according to claim 1, wherein
the processing circuitry (51) is configured to perform, each time the traveling speed is acquired during the vehicle performance test:
identifying one of multiple divided speed regions (LVR, MVR, HVR) to which the previously acquired speed (Vn-1) belongs (S31);
determining whether the reference value (Van-1) calculated for the previously acquired speed (Vn-1) is less than or equal to a maximum criterion value (RVLM, RVMM, RVHM) (S132), the maximum criterion value (RVLM, RVMM, RVHM) being a maximum value of multiple criterion values output in the identified speed region (LVR, MVR, HVR) by a function (Equation 2, Equation 3) that outputs a larger criterion value as the traveling speed substituted into the function (Equation 2, Equation 3) increases; and
updating, as the calculated value (MxOR), a number of the reference values (Van-1) stored in the storage device (52) for each of the speed regions (LVR, MVR, HVR) and a number (NVa) of the reference values (Van-1) less than or equal to the maximum criterion value (RVLM, RVMM, RVHM) (S134), and
the processing circuitry (51) is configured to perform, by checking information stored in the storage device (52) after the vehicle performance test is ended:
calculating an at-or-below maximum criterion value ratio (MxOR) stored for each of the speed regions (LVR, MVR, HVR) (S141), the at-or-below maximum criterion value ratio (MxOR) being a ratio of a number (NVa) of the reference values (Van-1) less than or equal to the maximum reference value (RVLM, RVMM, RVHM) to a total number (TNVa) of the reference values (Van-1) in the corresponding speed region (LVR, MVR, HVR);
determining that the manner in which the vehicle performance test is conducted satisfies the performance condition (S145) when the at-or-below maximum criterion value ratios (MxOR) in all the speed regions (LVR, MVR, HVR) are greater than or equal to a threshold (ORth) (S142: YES); and
determining that the manner in which the vehicle performance test is conducted does not satisfy the performance condition (S146) when the at-or-below maximum criterion value ratio (MxOR) in at least one of the speed regions (LVR, MVR, HVR) is less than the threshold (ORth) (S142: NO).

4. The data acquisition device according to claim 2 or 3, wherein
the processing circuitry (51) is configured to perform, each time the traveling speed is acquired during the vehicle performance test:
calculating an incremental travel distance (S37), the incremental travel distance being a distance traveled by the vehicle (100) from when the speed from two measurements earlier (Vn-2) was acquired to when the previously acquired speed (Vn-1) was acquired;
identifying one of the speed regions (LVR, MVR, HVR) to which the previously acquired speed (Vn-1) belongs; and
updating an accumulated incremental travel distance value (DS) stored in the storage device (52) for each of the speed regions (LVR, MVR, HVR) (S39), the accumulated incremental travel distance value (DS) being an accumulated value of the incremental travel distance calculated for the traveling speed belonging to the speed region (LVR, MVR, HVR) (S38), and
the processing circuitry (51) is configured to perform, by checking information stored in the storage device (52) after the vehicle performance test is ended:
determining, when the accumulated incremental travel distance value (DS) in at least any one of the speed regions (LVR, MVR, HVR) is less than or equal to a prescribed distance value (DSth) (S42: NO), that the manner in which the vehicle performance test is conducted does not satisfy the performance condition (S45) even if the at-or-below maximum criterion value ratios (MxOR) in all the speed regions (LVR, MVR, HVR) are greater than or equal to the threshold (ORth) (S41: YES).

5. The data acquisition device according to any one of claims 2 to 4, wherein the processing circuitry (51) is configured to perform determining, when the number of the reference values (Van-1) in any one of the speed regions (LVR, MVR, HVR) is less than or equal to a prescribed number (VaNth) (S43: NO), that the manner in which the vehicle performance test is conducted does not satisfy the performance condition (S45) even if the at-or-below maximum criterion value ratios (MxOR) in all the speed regions (LVR, MVR, HVR) are greater than or equal to the threshold (ORth) (S41: YES).

6. The data acquisition device according to claim 1, wherein
the processing circuitry (51) is configured to perform, each time the traveling speed is acquired during the vehicle performance test:
identifying one of multiple divided speed regions (LVR, MVR, HVR) to which the previously acquired speed (Vn-1) belongs (S51);
calculating an accumulated reference value (VaS) as an accumulated value of the reference value (Van-1) in the identified speed region (LVR, MVR, HVR) (S53);
calculating an incremental travel distance (S55), the incremental travel distance being a distance traveled by the vehicle (100) from when the speed from two measurements earlier (Vn-2) was acquired to when the previously acquired speed (Vn-1) was acquired;
calculating an accumulated incremental travel distance value (DS) that is an accumulated value of the incremental travel distance in the identified speed region (LVR, MVR, HVR) (S56);
updating, as the calculated value (RPA), a quotient obtained by dividing the accumulated reference value (VaS) by the accumulated incremental travel distance value (DS) (S56, S57), the accumulated reference value (VaS) having been stored in the storage device (52) for each of the speed regions (LVR, MVR, HVR);
calculating, as an average vehicle speed (VNavg) during the vehicle performance test in the identified speed region (LVR, MVR, HVR), a sum of a quotient obtained by dividing the previously acquired speed (Vn-1) by a number of traveling speed acquisitions (NC) in the identified speed region (LVR, MVR, HVR) and a quotient obtained by dividing, by the number of traveling speed acquisitions (NC), an accumulated traveling speed value (VPavg × (NC-1)) in the identified speed region (LVR, MVR, HVR) except the previously acquired speed (Vn-1) (S60); and
updating the average vehicle speed that has been stored in the storage device (52) for each of the speed regions (LVR, MVR, HVR) (S61), and
the processing circuitry (51) is configured to perform, by checking information stored in the storage device (52) after the vehicle performance test is ended:
calculating a threshold (RPAth) for each of the speed regions (LVR, MVR, HVR) (S71) by substituting into a function the average vehicle speed that has been calculated last during the vehicle performance test;
determining that the manner in which the vehicle performance test is conducted satisfies the performance condition (S73) when the calculated values (RPA) in all the speed regions (LVR, MVR, HVR) are greater than or equal to the threshold (RPA threshold RPAth) (S72: YES); and
determining that the manner in which the vehicle performance test is conducted does not satisfy the performance condition (S74) when the calculated value (RPA) in at least one of the speed regions (LVR, MVR, HVR) is less than the threshold (RPAth).

7. The data acquisition device according to claim 1, wherein
the processing circuitry (51) is configured to perform, each time the traveling speed is acquired during the vehicle performance test:
identifying one of multiple divided speed regions (LVR, MVR, HVR) to which the previously acquired speed (Vn-1) belongs (S151);
calculating an accumulated reference value (VaS) as an accumulated value of the reference value (Van-1) in the identified speed region (LVR, MVR, HVR) (S153);
calculating an incremental travel distance (S155), the incremental travel distance being a distance traveled by the vehicle (100) from when the speed from two measurements earlier (Vn-2) was acquired to when the previously acquired speed (Vn-1) was acquired;
calculating an accumulated incremental travel distance value (DS) that is an accumulated value of the incremental travel distance in the identified speed region (LVR, MVR, HVR);
updating, as the calculated values, the accumulated reference value (VaS) and the accumulated incremental travel distance value (DS) (S154, S157), which have been stored in the storage device (52) for each of the speed regions (LVR, MVR, HVR);
calculating, as an average vehicle speed (VNavg) during the vehicle performance test in the identified speed region (LVR, MVR, HVR), a sum of a quotient obtained by dividing the previously acquired speed (Vn-1) by a number of traveling speed acquisitions (NC) in the identified speed region (LVR, MVR, HVR) and a quotient obtained by dividing, by the number of traveling speed acquisitions (NC), an accumulated traveling speed value (VPavg × (NC-1)) in the identified speed region (LVR, MVR, HVR) except the previously acquired speed (Vn-1) (S158); and
updating the average vehicle speed that has been stored in the storage device (52) for each of the speed regions (LVR, MVR, HVR) (S159), and
the processing circuitry (51) is configured to perform, by checking information stored in the storage device (52) after the vehicle performance test is ended:
calculating an acceleration threshold (RPAth) for each of the speed regions (LVR, MVR, HVR) by substituting into a function the average vehicle speed that has been calculated last during the vehicle performance test (S172);
calculating, for each of the speed regions (LVR, MVR, HVR), an average acceleration (RPA) that is a quotient obtained by dividing the accumulated reference value (VaS) by the accumulated incremental travel distance value (DS) (S171);
determining that the manner in which the vehicle performance test is conducted satisfies the performance condition (S174) when the average accelerations (RPA) in all the speed regions (LVR, MVR, HVR) are greater than or equal to the acceleration threshold (RPAth) (S173: YES); and
determining that the manner in which the vehicle performance test is conducted does not satisfy the performance condition when the average acceleration (RPA) in at least one of the speed regions (LVR, MVR, HVR) is less than the acceleration threshold (RPAth) (S173: NO) (S175).

8. The data acquisition device according to any one of claims 1 to 7, wherein the processing circuitry (51) is configured to not perform calculating the reference value (Van-1) when the previous acceleration (ACn-1) is less than or equal to a prescribed acceleration (ACth) (S22: NO).

9. The data acquisition device according to any one of claims 1 to 8, wherein the processing circuitry (51) and the storage device (52) are formed by at least one of one or multiple onboard electronic control units of the vehicle (100).

10. A data acquisition method, comprising:
acquiring, by processing circuitry (51) mounted on a vehicle (100), a traveling speed of the vehicle (100) multiple times to acquire a currently acquired speed (Vn), a previously acquired speed (Vn-1), and a speed acquired two measurements earlier (Vn-2),
wherein the method further comprises, each time the traveling speed is acquired during a vehicle performance test of the vehicle (100):
calculating, based on the speed from two measurements earlier (Vn-2) and the currently acquired speed (Vn), a previous acceleration (ACn-1) as an acceleration of the vehicle (100) at a time point of acquiring the previously acquired speed (Vn-1) (S21);
calculating a reference value (Van-1) that is a product of the previously acquired speed (Vn-1) and the previous acceleration (ACn-1) (S23); and
updating a calculated value (MxOR) stored in a storage device (52) (S36), the calculated value (MxOR) being calculated based on the reference value (Van-1), and
the method further comprises, after an end of the vehicle performance test, determining whether a manner in which the vehicle performance test is conducted satisfies a performance condition based on the calculated value (MxOR) (S41 to S45).

11. A program implemented by a non-transitory computer-readable storage medium that stores a program code for causing processing circuitry (51) mounted on a vehicle (100) to execute a data acquisition process, wherein
the data acquisition process performs
acquiring a traveling speed of the vehicle (100) multiple times to acquire a currently acquired speed (Vn), a previously acquired speed (Vn-1), and a speed from two measurements earlier (Vn-2),
the data acquisition process performs, each time the traveling speed is acquired during a vehicle performance test of the vehicle (100):
calculating, based on the speed from two measurements earlier (Vn-2) and the currently acquired speed (Vn), a previous acceleration (ACn-1) as an acceleration of the vehicle (100) at a time point of acquiring the previously acquired speed (Vn-1) (S21);
calculating a reference value (Van-1) that is a product of the previously acquired speed (Vn-1) and the previous acceleration (ACn-1) (S23); and
updating a calculated value (MxOR) stored in a storage device (52) (S36), the calculated value (MxOR) being calculated based on the reference value (Van-1), and
the data acquisition process performs
determining, after an end of the vehicle performance test, whether a manner in which the vehicle performance test is conducted satisfies a performance condition based on the calculated value (MxOR) (S41 to S45).
